# EUROPEAN PATENT APPLICATION

(11) **EP 1 729 297 A1**
(43) Date of publication of application: **06.12.2006**
(21) Application number: 05721482.7
(22) Date of filing: 25.03.2005
(51) Int. Cl.: G11B 17/26

(54) **RECORDING MEDIUM REPRODUCER**

(30) Priority: 25.03.2004 JP 2004090013
(71) Applicant: Pioneer Corporation, Tokyo 153-8654 (JP); Tohoku Pioneer Corporation, Tendo-shi, Yamagata 994-8585 (JP)
(72) Inventor: Yoshida, Susumu, c/o Pioneer Corporation, Kawagoe-shi, Saitama 3508555 (JP); Shinkai, Yasuhiro, c/o Pioneer Corporation, Kawagoe-shi, Saitama 3508555 (JP); Saitou, Kazuhiro, c/o Tohoku Pioneer Corporation, Tendo-shi, Yamagata 9948585 (JP); Suzuki, Toru, c/o Pioneer Corporation, Kawagoe-shi, Saitama 3508555 (JP); Mizoguchi, Takashi, c/o Pioneer Corporation, Kawagoe-shi, Saitama 3508555 (JP); Shimosawa, Ryosuke, c/o Pioneer Corporation, Kawagoe-shi, Saitama 3508555 (JP); Takahashi, Hideaki, c/o Pioneer Corporation, Kawagoe-shi, Saitama 3508555 (JP); Muto, Akihiro, c/o Pioneer Corporation, Kawagoe-shi, Saitama 3508555 (JP); Tahakashi, Akira, c/o Zero Engineering Co., Ltd.,, Nagoya-shi, Aichi 4660827 (JP); Noboribayashi, Y., c/o Zero Engineering Co., Ltd., Nagoya-shi, Aichi 4660827 (JP)
(74) Representative: Grünecker, Kinkeldey, Stockmair & Schwanhäusser Anwaltssozietät
(86) International application number: PCT/JP2005/005555
(87) International publication number: WO 2005/093742

(57) **Abstract**

[problem] Providing a playback apparatus to surely play back a selected medium even when a vehicle mounting the playback apparatus is shaken.

[means for solving the problem] A CD changer 1 is composed of a disk receiver and a separating mechanism 7. The disk receiver is composed of a moving chassis 18 and holders 19 having projections 29. The separating mechanism 7 is composed of a rotating member 25, a moving member 26, and a cam member 24. The moving chassis 18 is mounted on the moving member 26. Second walls 27 are mounted on the rotating member 25 and the moving member 26. The cam member 24 is movable between the moving chassis 18 and the second walls 27 along an arrow K, and is provided with a guiding groove 31 engaged with the projection 29. First and second spaced grooves 39, 40 are respectively formed between the moving chassis 18 and the cam member 24, and between the cam member 24 and the second walls 27.

## Description

### [technical field]

This invention relates to a playback apparatus for recording media mounted on such as a vehicle, in particular, the playback apparatus which receives a plurality of recording media in a body thereof and plays back one of the recording media.

### [background]

There is used a playback apparatus for recording media receiving a plurality of recording media such as a compact disc (hereunder referred to as "CD") and playing back one of the recording media (for example, Patent Document 1). Such a playback apparatus 101 is mounted on such as a vehicle, and includes a not-shown main body, a plurality of retaining members 102 received in a receiving part, a coil spring 103, a cam member 104, and a not-shown optical pick-up 66.

The main body is made in a flat box shape. The retaining members 102 respectively hold the recording media. Projections 105 are respectively mounted on the retaining members 102. The retaining members 102 are overlapped with each other. Further, a plurality of retaining members 102 are separately mounted. The retaining members 102 are received in a receiver in a main body of the apparatus.

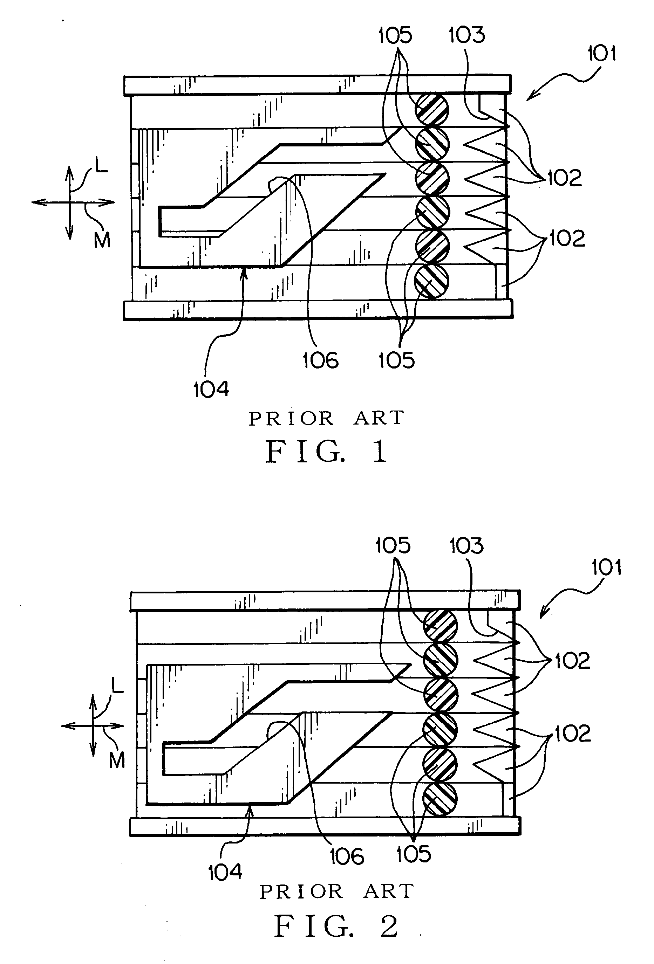

The coil spring 103 urges the retaining members 102 to overlap each other. The cam member 104 is formed in a wedge shape, and a tip of the cam member 104 is at an acute angle. A cam hole 106 is formed on the acute tip of the cam member 104. The cam hole 106 is open at the tip end. Projections 105 of the retaining members 102 is insertable into the cam hole 106. In the cam member 104, the cam hole 106 faces the projections 105 of the retaining members 102. The cam member 104 is movable by a not shown transporting member in both a direction L (shown as an arrow in Fig. 1) to which the retaining members 102 are overlapped with each other and a direction M (shown as another arrow in Fig. 1) perpendicular to the direction L. The cam member 104 is movable in left-right and up-down directions in Fig. 1.

The optical pickup 66 plays back the selected CD held by the selected retaining member 102 among the retaining members 102.

As shown in Fig. 2, after selecting the one recording media, the playback apparatus 101 moves the cam member 104 in a manner that the cam hole 106 faces the projection 105 of the selected retaining member 102 along the arrow M. Incidentally, in Fig. 2, the cam hole 106 faces the third projection 105 of the retaining member 102 from the top. Then, the cam member 104 moves along the arrow M to be gradually close to the projection 105.

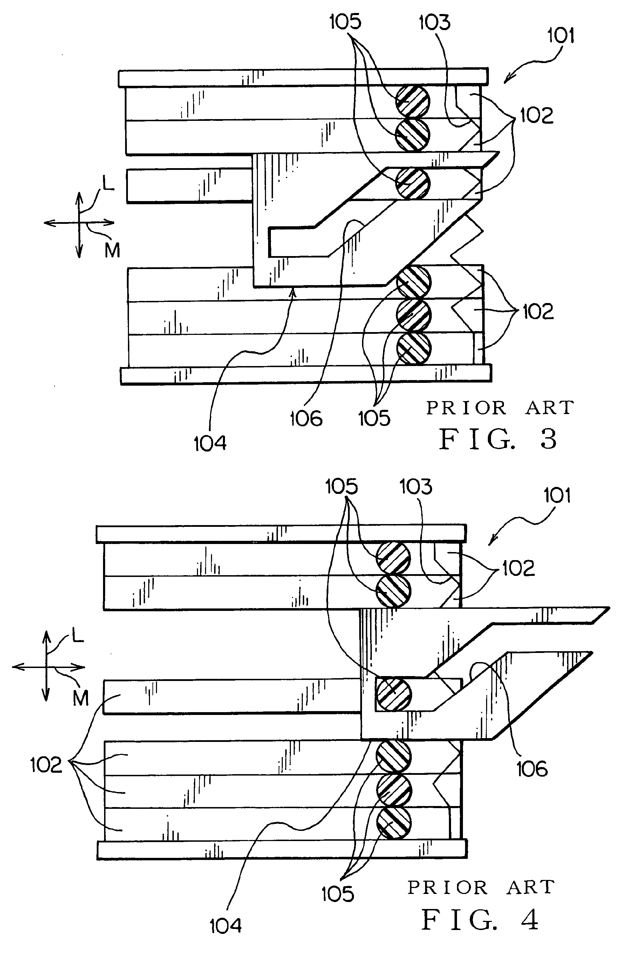

Then, as shown in Fig. 3, the projection 105 of the selected retaining member 102 is inserted into the cam hole 106, and the projections 105 of the other retaining members 102 contact outer edges of the cam member 104. Further, for inserting the projection 105 into inner space of the cam hole 106, the cam member 104 is moved along the arrow M. Then, as shown in Fig. 4, the projections 105 of the other retaining members 102 are slid on the outer edges of the cam member 104 against the urging force of the coil spring 103. Thus, the selected retaining member 102 is separated from the other retaining members 102. Then, the optical pickup 66 is inserted into between the selected and the other retaining members 102 and play back the selected recording medium. [Patent Document 1] Japanese Published Patent Application No. 2002-304800

### [disclosure of the invention]

### [problem to be solved by the invention]

However, the conventional playback apparatus 101 urges the retaining members 102 in a direction of being close to each other with the coil spring 103. Therefore, when a vehicle is shaken, the retaining members 102 may be shaken. Thus, the projection 105 of the non-selected retaining member 102 may be inserted into the cam hole 106.

In this case, the non-selected recording media may be played back.

For avoiding this problem, a sliding cam may be used instead of the coil spring 103. In this case, the sliding cam with the cam member 104 is moved toward a direction of overlapping the recording media. According to the conventional apparatus, only one slot is used for receiving the recording medium. In such a case, every retaining member 102 must move to the slot, and the sliding cam with the cam member 104 is moved toward a direction of overlapping the recording media. Thus, a thickness of the apparatus should be larger.

An object of the present invention is to provide a compact playback apparatus for recording media which surely plays back a selected recording media even when a vehicle on which the playback apparatus is mounted is shaken.

### [means for solving problem]

According to the claim 1, there is provided a playback apparatus for recording media including:
a receiver for receiving a plurality of holders for holding recording media, said holders overlapping to each other;
a playback device for playing back the recording media held by the holders;
a transporting device for transporting the playback device to a position facing a recording surface of a selected recording medium; and
a separating device for separating a selected holder from the other holders in a direction of overlapping of the recording media,
wherein the separating device is movable in the direction of overlapping of the recording media, and includes a first member having a guiding groove on which the holder with the selected recording medium slides, and a second member movable in the direction of overlapping independently from the first member,
wherein a separating groove, on which the holders holding the other recording media slide, is formed by a relative movement between the first and the second members.

In addition, according to claim 7, there is provided a playback apparatus for recording media including:
a receiver for receiving a plurality of holders for holding recording media, said holders overlapping to each other;
a playback device for playing back the recording media held by the holders;
a transporting device for transporting the playback device to a position facing a recording surface of a selected recording medium; and
a separating device for separating a selected holder from the other holders in a direction of overlapping of the recording media,
wherein the separating device is movable in the direction of overlapping of the recording media, and includes a first member having a guiding groove on which the holder with the selected recording medium slides, and a second member movable in the direction of overlapping independently from the first member,
wherein the separating device includes a dividable sliding wall for sliding the other holders in a direction of separating the other holders from the selected holder.

### [brief description of drawings]

[Fig. 1] An explanatory schematic view showing a conventional playback apparatus for recording media.
[Fig. 2] An explanatory schematic view showing a state that a cam hole of a cam member shown in Fig. 1 faces a projection of a selected holder.
[Fig. 3] An explanatory schematic view showing a state that the projection is inserted into the cam hole from the state in Fig. 2.
[Fig. 4] An explanatory schematic view showing a state that the projection is positioned in an inner space of the cam hole shown in Fig. 3.
[Fig. 5] A perspective view showing an appearance of a CD changer as a playback apparatus according to an embodiment of the present invention.
[Fig. 6] A perspective view showing a fixed chassis, a disk loader, a playback part, a disk receiver, and a separating mechanism mounted on the CD changer in Fig. 5.
[Fig. 7] A partially exploded perspective view showing the fixed chassis, the playback part 6, and the disk receiver.
[Fig. 8] A perspective view showing the disk receiver and the driving chassis shown in Fig. 7 assembled with each other.
[Fig. 9] A perspective view showing the holders of the disk receiver in Fig. 6 and a spaced groove expansion mechanism.
[Fig. 10] An enlarged perspective view showing the spaced groove expansion mechanism in Fig. 9.
[Fig. 11] A perspective view showing a moving member of the spaced groove expansion mechanism shown in Fig. 10 being the farthest away from a second wall, and a projection of the holder facing a guiding groove.
[Fig. 12] A perspective view showing the projection positioned on a playback part of the guiding groove by rotating a cam member of the spaced groove expansion mechanism shown in Fig. 11.
[Fig. 13] A perspective view showing the cam member of the spaced groove expansion mechanism shown in Fig. 10 being the closest to a second wall, and the projection of the selected holder facing a guiding groove.
[Fig. 14] A perspective view showing the projection positioned on a loading part of the guiding groove by rotating the cam member of the spaced groove expansion mechanism shown in Fig. 13.
[Fig. 15] An enlarged perspective view showing the spaced groove expansion mechanism in Fig. 10.
[Fig. 16] A perspective view showing the cam member of the spaced groove expansion mechanism shown in Fig. 15 and the moving member positioned at the uppermost position.
[Fig. 17] A perspective view showing the moving member of the spaced groove expansion mechanism shown in Fig. 15 positioned at the uppermost position, and the cam member 24 positioned at the center position.
[Fig. 18] An exploded perspective view showing the spaced groove expansion mechanism in Fig. 15.
[Fig. 19] An exploded view in a circumferential direction showing the cam member and the moving member of the spaced groove expansion mechanism.
[Fig. 20] An exploded schematic view showing the guiding groove of the cam member facing the projection of the selected holder.
[Fig. 21] An exploded schematic view showing the cam member rotated from a state in Fig. 20, and the projection beginning to be inserted into the guiding groove.
[Fig. 22] An exploded view showing the cam member rotated from a state in Fig. 21, and the projection positioned in the loading part of the guiding groove.
[Fig. 23] An exploded view showing the cam member rotated from a state in Fig. 22, and the projection positioned in the pickup insertion part of the guiding groove.
[Fig. 24] An exploded view showing the cam member rotated from a state in Fig. 23, and the projection positioned in the clamp part of the guiding groove.
[Fig. 25] An exploded view showing the cam member rotated from a state in Fig. 24, and the projection positioned in the playback part of the guiding groove.
[Fig. 26] An exploded view showing the projection of the second holder from the bottom as shown in Fig. 25 positioned in the playback part of the guiding groove.
[Fig. 27] An exploded view showing the projection of the second holder from the top as shown in Fig. 25 positioned in the playback part of the guiding groove.
[Fig. 28] An exploded schematic view showing the cam member 24 in Fig. 19 positioned at the closest position to the second wall.
[Fig. 29] An exploded schematic view showing the projection of the selected holder facing the guiding groove of the cam member in Fig. 28.
[Fig. 30] An exploded view showing the cam member rotated from a state in Fig. 29, and the projection beginning to be inserted into the guiding groove.
[Fig. 31] An exploded view showing the cam member rotated from a state in Fig. 30, and the projection positioned in the loading part of the guiding groove.
[Fig. 32] An exploded view showing the projection of the second holder from the top as shown in Fig. 31 positioned in the playback part of the guiding groove.
[Fig. 33] An exploded view showing the projection of the second holder from the bottom as shown in Fig. 31 positioned in the playback part of the guiding groove.
[Fig. 34] A plan view showing a cooperative moving mechanism in Fig. 19.
[Fig. 35] A plan view showing the cooperative moving mechanism in Fig. 20.
[Fig. 36] A plan view showing a cooperative moving mechanism in Fig. 26.
[Fig. 37] A plan view showing a cooperative moving mechanism in Fig. 27.
[Fig. 38] A plan view showing a cooperative moving mechanism in Fig. 28.
[Fig. 39] A plan view showing a cooperative moving mechanism in Fig. 29.
[Fig. 40] A plan view showing a cooperative moving mechanism in Fig. 32.
[Fig. 41] A plan view showing a cooperative moving mechanism in Fig. 33.

### [best mode for carrying out the invention]

An embodiment of a playback apparatus for recording media according to the present invention will be explained. The separating device is movable in the direction of overlapping of the recording media, and includes a first member having a guiding groove on which the holder with the selected recording medium slides, and a second member movable in the direction of overlapping independently from the first member. A separating groove, on which the holders holding the other recording media slide, is formed by a relative movement between the first and the second members. Thus, the holder holding the selected medium is engaged with the guiding groove, and the other holders are engaged with the separating groove. Thereby, the holder holding the selected recording medium can be separated from the other holders. Thus, the holder can be positioned without any rattle and the recording medium held by the holder can be played back.

In addition, a groove width of the separating groove may be variable corresponding to relative movement between the cam member and a transporting member.

Further, the separating groove may include a first separating groove engaged with the other holders disposed upper than the holder holding the selected recording medium, and a second separating groove engaged with the other holders disposed lower than the holder holding the selected recording medium. The groove width between the first and the second grooves may be variable corresponding to relative movement between the cam member and the transporting member.

Further, the first separating groove may be composed of a first all and a top wall of the cam member, and the second separating groove may be composed of a second wall and a bottom wall of the cam member.

Further, the separating device may be disposed coaxially with the cam member and the transporting member, and include a rotation member for rotating them.

Further, the separating device may have a single driving source for driving the cam member and the transporting member in a direction of overlapping of the holders.

Further, the separating device for separating the holder holding the selected recording medium from the other holders includes a dividable sliding wall for sliding the other holders in a direction of separating the holder from the other holders. Thus, for example, when the recording medium is transported, the sliding wall is divided. When the transporting device transports the recording media, because a range for sliding the holders is short, sliding wall is divided. Thus, when the transporting device transports the recording media, only a necessary sliding wall is moved for sliding the holders, a thickness of the apparatus can be slim.

### [embodiment]

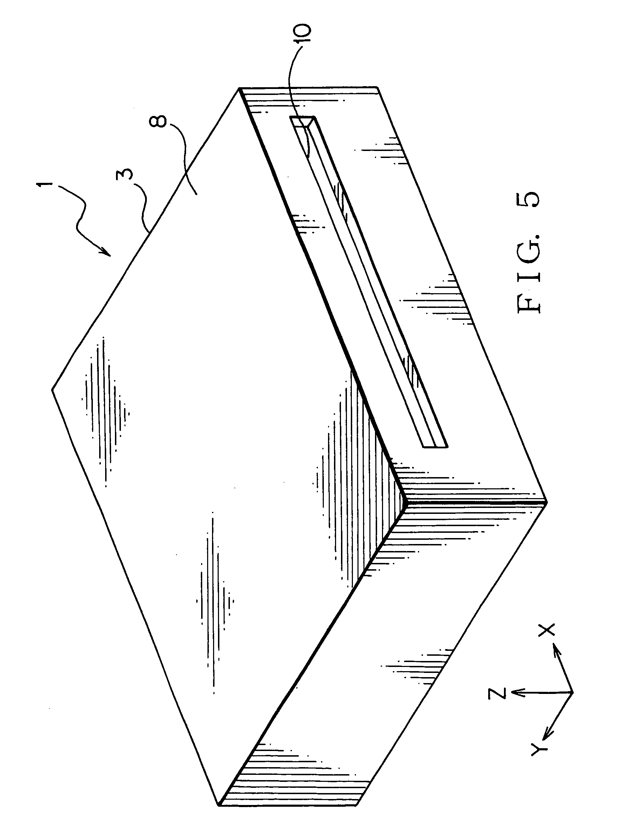

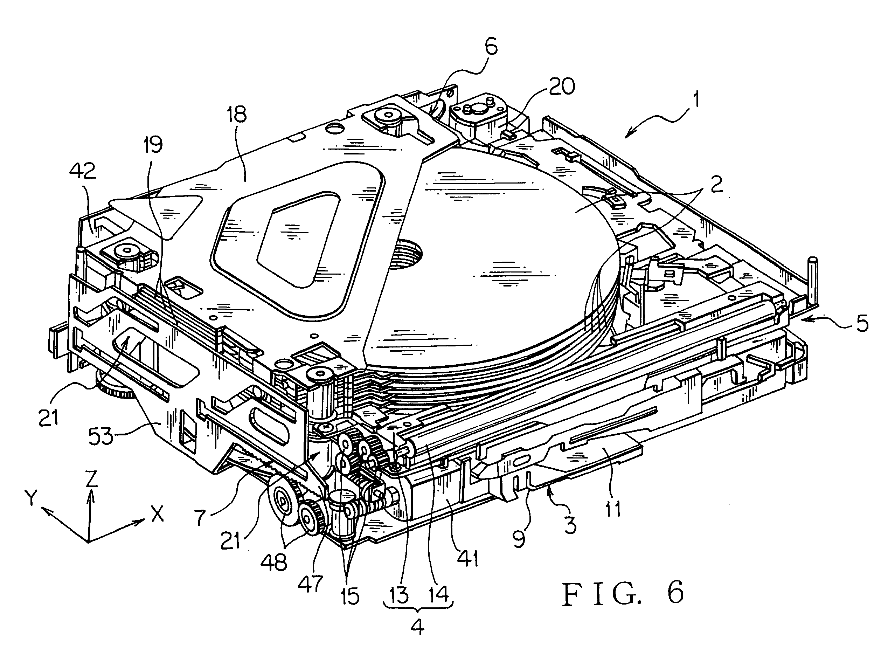

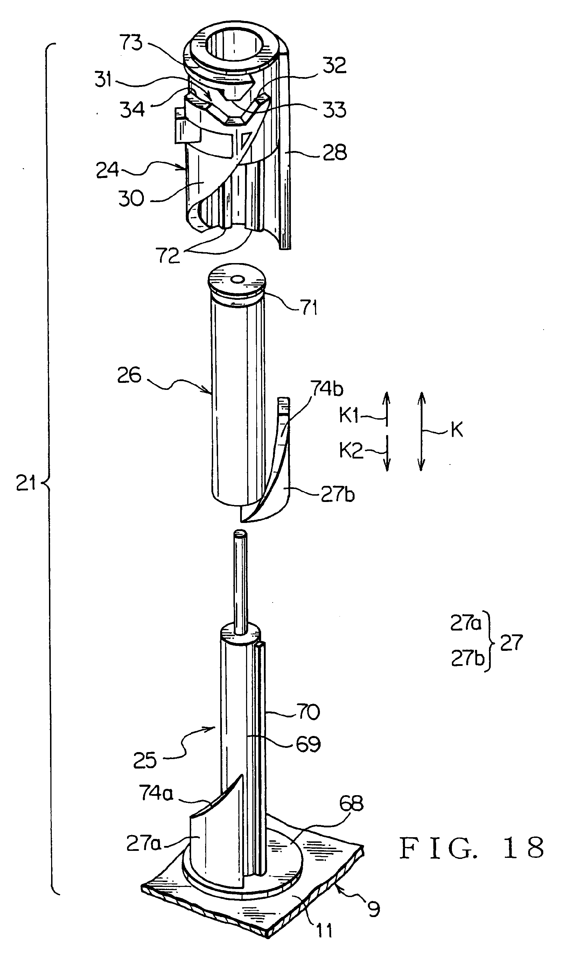

As an embodiment of the present invention, a CD changer 1 will be explained with reference to Figs. 5 to 41. As shown in Fig. 5, the CD changer 1 is mounted on a vehicle or the like, receives a plurality of CDs 2 (shown in Fig. 6), and plays back a selected CD to output as a sound signal. CD 2 is, of course, a recording media formed in a disk shape.

As shown in Fig. 6, the CD changer 1 includes a main body 3 (shown in Fig. 5), a not-shown operation panel, a disk loader 4, a playback part 5, a disk receiver 6, and a separating mechanism 7. Incidentally, an arrow X in Fig. 6 indicates a width direction of the CD changer 1, and an arrow Y indicates a depth direction of the CD changer 1, and an arrow Z indicates a thickness direction of the CD changer 1.

The main body 3 includes an outer case 8 made of synthetic resin shown in Fig. 5, and a fixed chassis 9 made of metal plate shown in Fig. 6. The outer case 8 is formed in a flat box shape. A slot 10 through which the CD 2 is inserted and ejected is disposed on the outer case 8. The slot 10 is a through- hole on an outer wall of the outer case 8. The CD 2 can be inserted through the slot 10. The CD 2 can be inserted into and ejected from the outer case 8 of the main body of the playback apparatus 3 through the slot 10.

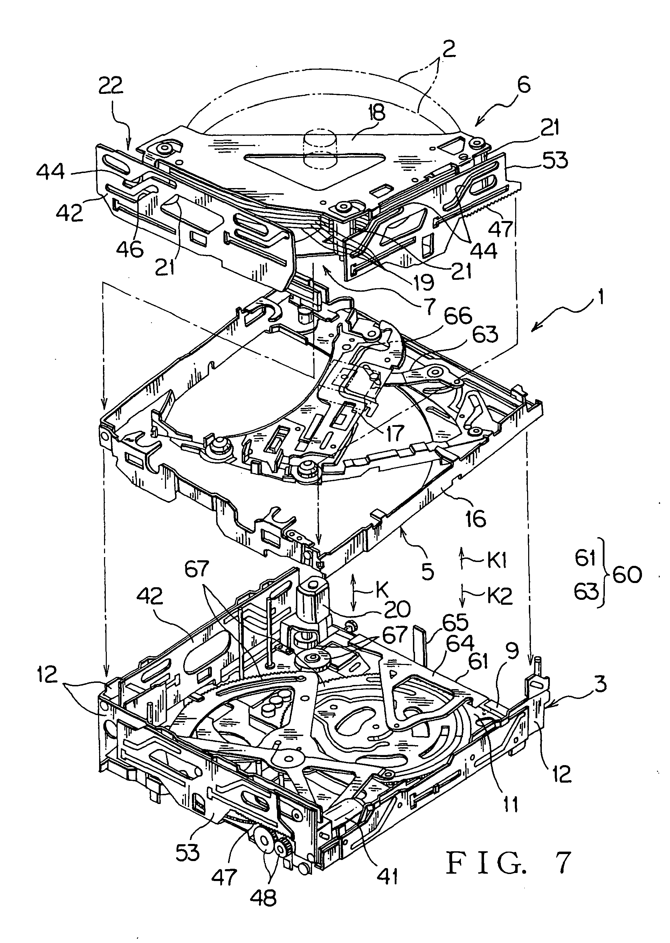

The fixed chassis 9 is received in and fixed to the outer case 8. As shown in Fig. 7, the fixed chassis 9 includes a plate-shaped bottom wall 11, and side walls 12 extending vertically from the bottom wall 11. The bottom wall 11 is overlapped on a bottom wall of the outer case 8 shown in Fig. 5.

The operation panel is separated from and connected to the main body of the playback apparatus 3. A user of the CD changer 1 pushes a button on the operation panel for operating. The operation panel is used for setting a later-described holder 19 for holding the CD 2 to be inserted into the main body of the playback apparatus 3 through the slot 10. The operation panel is used for setting the holder 19 holding the CD 2 to be ejected from the main body of the playback apparatus 3 through the slot 10. The operation panel is used for setting the CD 2 to be read out among the CDs 2 held by a plurality of the holders 19.

The disk loader 4 is received in the main body of the playback apparatus 3, and as shown in Fig. 6, includes a roller arm 13 and a roller 14. The roller arm 13 is made of metal plate or the like, and formed in a strip shape. The roller arm 13 is disposed in the vicinity of the slot 10, and attached to the main body of the playback apparatus 3.

The roller 14 is supported by the roller arm 13 rotatably about a shaft thereof. The shaft of the roller 14 is parallel to the width direction X of the CD changer 1. An outer wall of the roller 14 comes into contact with the CD 2 through the slot 10. A later-described motor 41 rotates the roller around the shaft thereof through a plurality of gears 15. The disk loader 4 inserts the CD 2 into the slot 10 by the outer wall of the roller 14 contacting the CD 2, and the motor 14 rotating the roller 14.

The playback part 5 is received in the main body of the playback apparatus 3. As shown in Fig. 7, the playback part 5 includes the moving chassis and a swinging chassis 17 and a not-shown pickup playback part. The moving chassis is made of metal plate or the like and formed in a frame shape. The moving chassis 16 is supported by the side walls 12 of the fixed chassis 9 movably along a stacking direction K (shown as an arrow in Fig. 7) of the holders 19 of the disk receiver 6.

The swinging chassis 17 is made of metal plate or the like, and formed on a band plate shape. The swinging chassis 17 is supported by the moving chassis 16 rotatably about one end thereof. By rotating about the one end, the other end of the swinging chassis 17 can be inserted among a plurality of CDs 2, and removed from the CDs 2.

As shown in Fig. 7, the transporting mechanism 60 includes a first slide chassis 61, a second slide chassis, and a swinging arm 63. The first slide chassis 61 is made of metal plate, and integrally includes a horizontal part 64 and a vertical piece 65. The horizontal part 64 is formed in a plate shape, and overlapped with the plate-shaped bottom wall 11 of the fixed chassis 9.

The horizontal part 64 is supported by the bottom wall 11 slidably along a longitudinal direction of the swinging chassis 17 of which the other end is removed from the CDs 2. The horizontal part 64 is moved along the longitudinal direction of the swinging chassis 17 of which the other end is removed from the CDs 2 by a driving force of a later-described motor 20 of the separating mechanism 7. The vertical piece 65 is extended from an edge of the horizontal part upward, namely, toward the second slide chassis.

The second slide chassis is made of metal plate, and formed in a plate shape. The second slide chassis is interposed between the moving chassis 16 and the bottom wall 11, and overlapped with the moving chassis 16. The second slide chassis is supported by the moving chassis 16 slidably along the longitudinal direction of the swinging chassis of which the other part is removed from the CDs 2.

The vertical piece 65 is locked on the second slide chassis. Therefore, the second slide chassis and the vertical piece 65 are moved along the longitudinal direction of the swinging chassis of which the other part is removed from the CDs 2 by the driving force of the motor 20.

The swinging arm 63 is made of metal plate, and formed in a plate shape. As shown in Fig. 7, a planar shape of the swinging arm 63 is formed in substantially a V-shape. The swinging arm 63 is rotatably supported by the moving chassis 16 about the center thereof. One end of the swinging arm 63 is connected to the second slide chassis. The other end of the swinging arm 63 is rotatably connected to the swinging chassis 17. The swinging arm 63 swings the swinging chassis 17 about the one end of the swinging chassis 17 when the second slide chassis slides along the longitudinal direction.

The transporting mechanism 60 moves the first slide chassis 61 and the second slide chassis by the driving force of the motor 20, and rotates the swinging arm 63 to swing the swinging chassis 17 about the one end thereof. The transporting mechanism 60 swings the swinging chassis 17 about the one end thereof to move the optical pickup 66 to a position opposed to a data recording surface of the CD 2 held in the holder 19.

The pickup playback part is mounted on a swinging chassis 17. The pickup playback part includes a turntable, a pickup part, and the like. The turntable includes a rotary table, a spindle motor, and a plurality of clamp nails. The rotary table is rotatably supported by the other end of the CRG chassis. The rotary table is formed in a disk shape on which the CD 2 is mounted. The spindle motor is interposed between the other end of the swinging chassis 17 and the rotary table. The spindle motor rotates the rotary table. The clamp nail is mounted on the rotary table and can be projected from the table. When being projected from the rotary table, the clamping nail is projected through a center hole of the CD 2 mounted on the rotary table, and catches the CD 2 with the rotary table. Thus, the clamp nail clamps the CD 2.

The pickup part includes an optical pickup 66 shown as a two-dot chain line in Fig. 7, and a pickup moving part. The optical pickup 66 is supported by the swinging chassis 17 movably in a direction of approaching the turntable. The optical pickup 66 reads out data from the CD 2 supported by the turntable. Namely, the optical pickup 66 plays back the CD 2 held in the holder 19. The pickup moving part moves the optical pickup 66 close to and away from the turntable.

In the playback part 5, the other end of the swinging chassis 17 is inserted among the CDs 2, and clamp nail clamps the CD 2 , and the rotary table of the turntable rotates the CD 2. In the playback part 5, the optical pickup 66 reads out data from the CD 2 rotated by the turntable.

The disk receiver 6 is received in the main body of the playback apparatus 3, and as shown in Fig. 7, includes a moving chassis 18 as a first wall and a plurality of the holders 19. The moving chassis 18 is made of metal plate, and formed in a plate shape. The moving chassis 18 is disposed parallel to the bottom wall 11 of the fixed chassis 9 with a gap. The playback part 5 is interposed between the moving chassis 18 and the bottom wall 11 of the fixed chassis 9. The moving chassis 18 is supported by the side walls 12 and the like movably along the arrow K.

The holder 19 is made of synthetic resin, and formed in a plate shape. A plan view of the holder 19 is a C-shape. The holders 19 are supported by the moving chassis 18 parallel to both the bottom wall 11 and the moving chassis 18. The opening of the C-shaped holder 19 faces the slot 10.

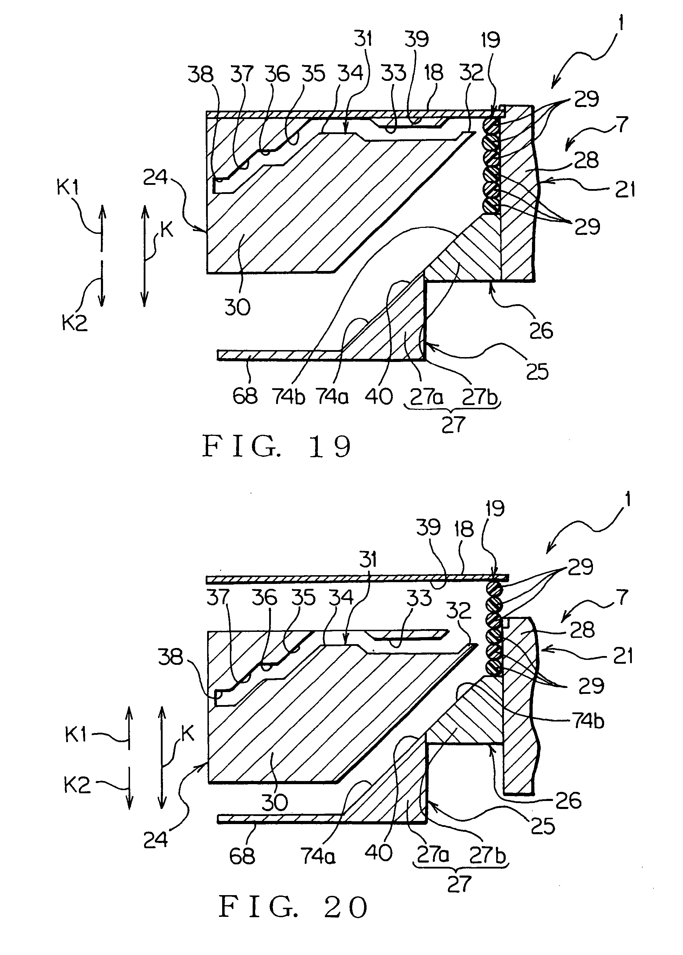

The holder 19 holds the CD 2 being inserted into the main body of the playback apparatus 3 via the slot 10. A plurality of the holders 19 are overlapped with each other in a manner that surfaces of the CDs 2 held in the holders 19 are parallel to each other. The holder 19 is supported by such as the moving chassis 18 movably along the arrow K. An outer projection 29 is disposed on each holder 19 (shown in Figs. 19 to 33). The disk receiver 6 receives stacked holders 19 which can hold the CDs 2.

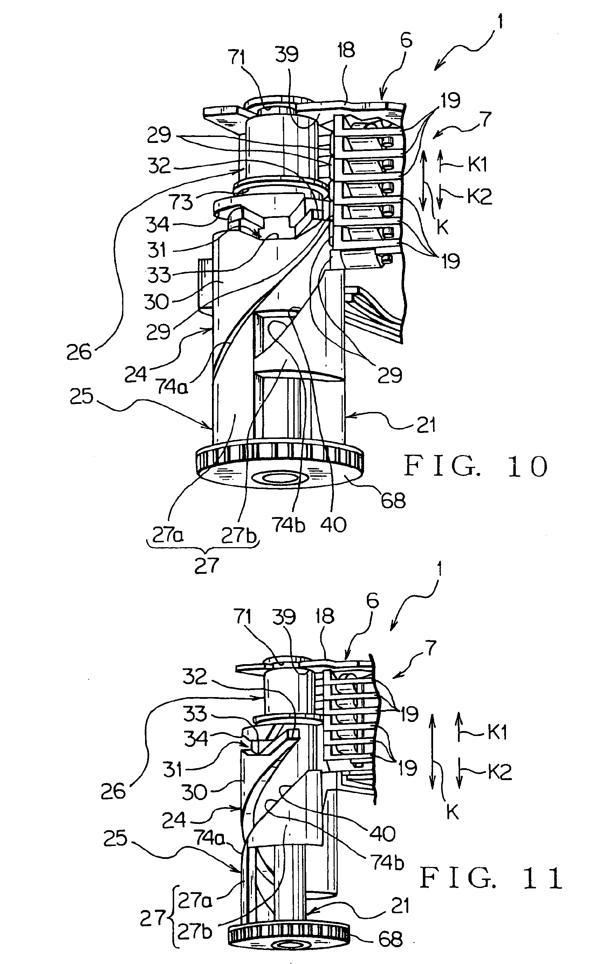

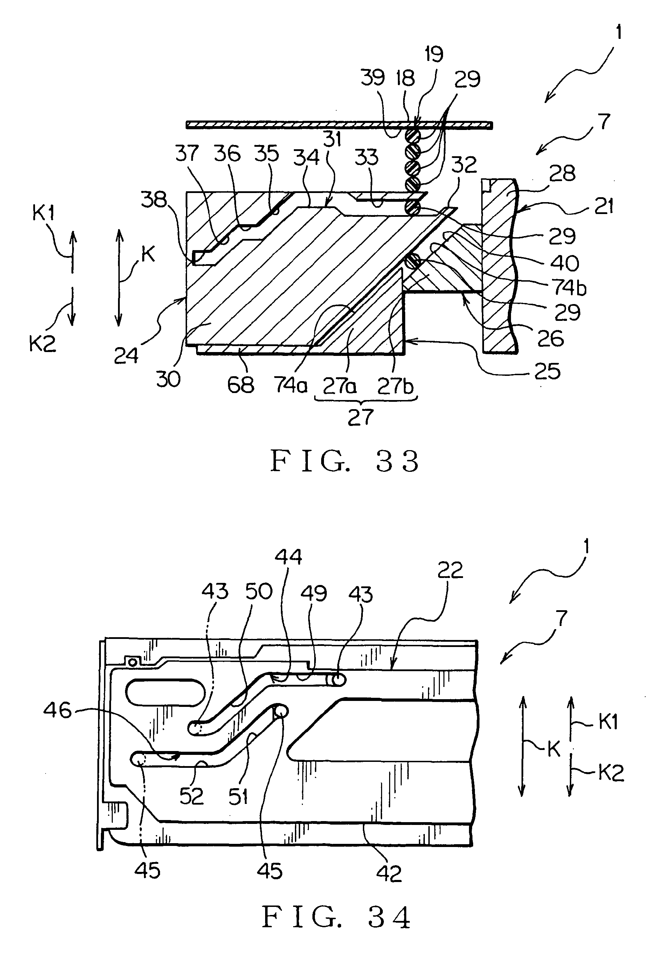

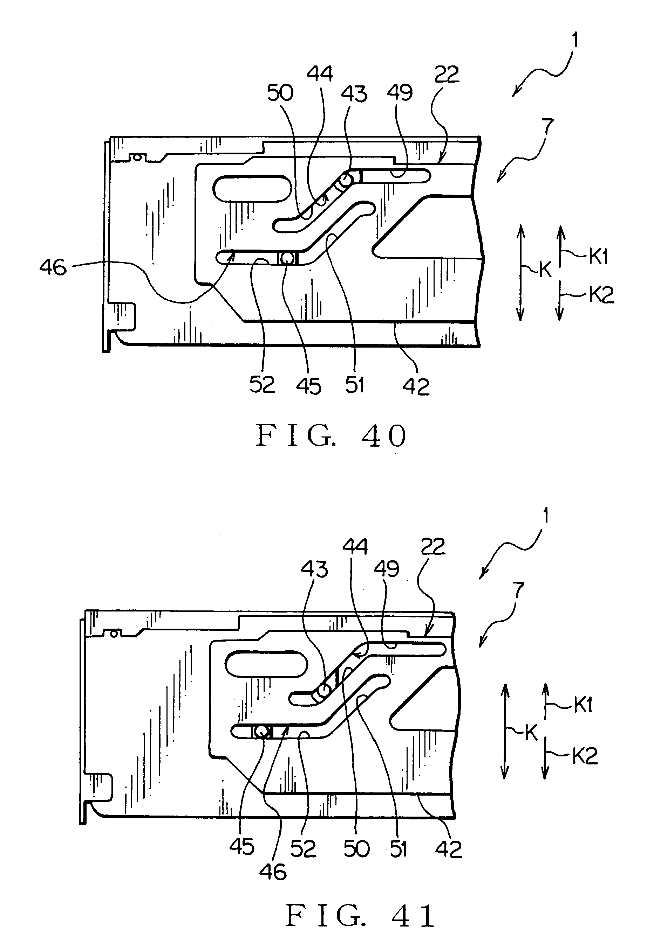

The separating mechanism 7 is received in the main body of the playback apparatus 3, and includes a motor (shown in Fig. 7), a spaced groove expansion mechanism 21 (shown in Figs. 10 to 14), and cooperative moving mechanism 22 (shown in Figs. 34,41). As shown in Fig. 7, the motor 20 is fixed to the fixed chassis 9.

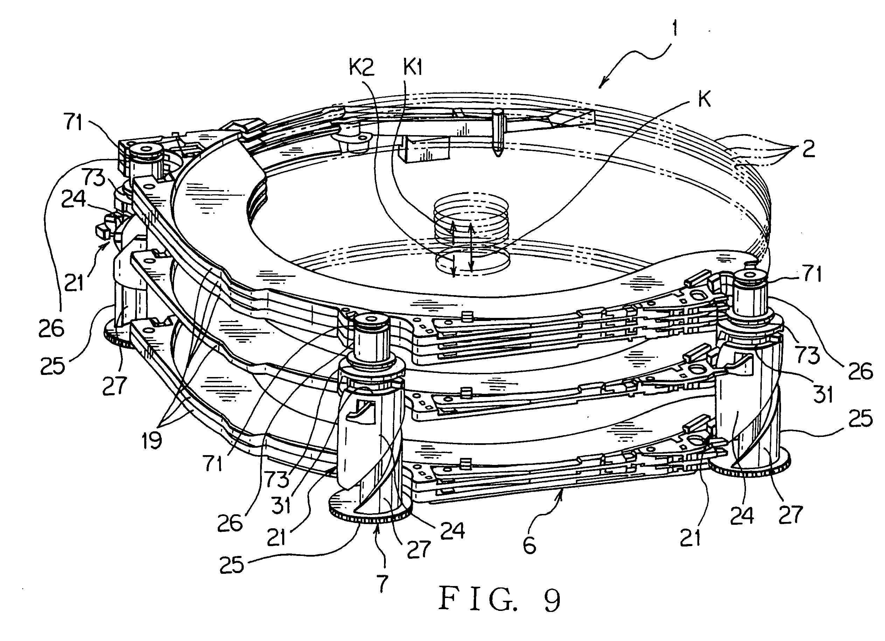

As shown in Fig. 9, three of the spaced groove expansion mechanisms 21 are mounted on the three corners of the main body of the playback apparatus 3. As shown in Figs. 10 to 18, the groove expansion mechanism 21 is formed in a column shape, and includes a rotating member 25, a moving member 26 as a second member, and a cam member 24 as a first member.

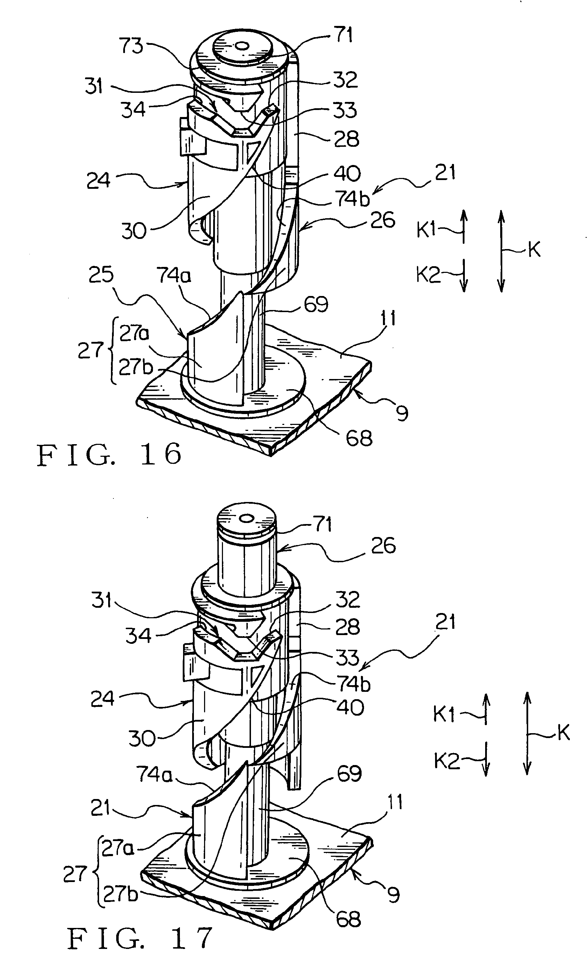

As shown in Figs. 16 to 18, the rotating member 25 includes a disk part 68 and a column part 69 coaxially integrated with each other. The disk part 78 is formed in a disk shape, and supported by the bottom wall 11 of the fixed chassis 9 rotatably about a shaft thereof. The column part 69 is formed in a column shape, and extended vertically from the disk part 68.

The shaft of the rotating member 25 is disposed parallel to the arrow K. In the rotating member 25, teeth disposed on an outer edge of the disk part 68 is engaged with a plurality of gears 67 disposed rotatably on the bottom wall 11. The rotating member 25 is connected to a pinion mounted on an output shaft of the motor 20 via the gears 67. The rotating member 25 is rotated with the gears 67 about the shaft by the driving force of the motor 20. This means that the motor 20 moves the rotating member 25 by the driving force of the motor 20. The rotating member 25 positions the moving member 26 and the cam member 24 coaxially, and rotates the moving member 26 and the cam member 24.

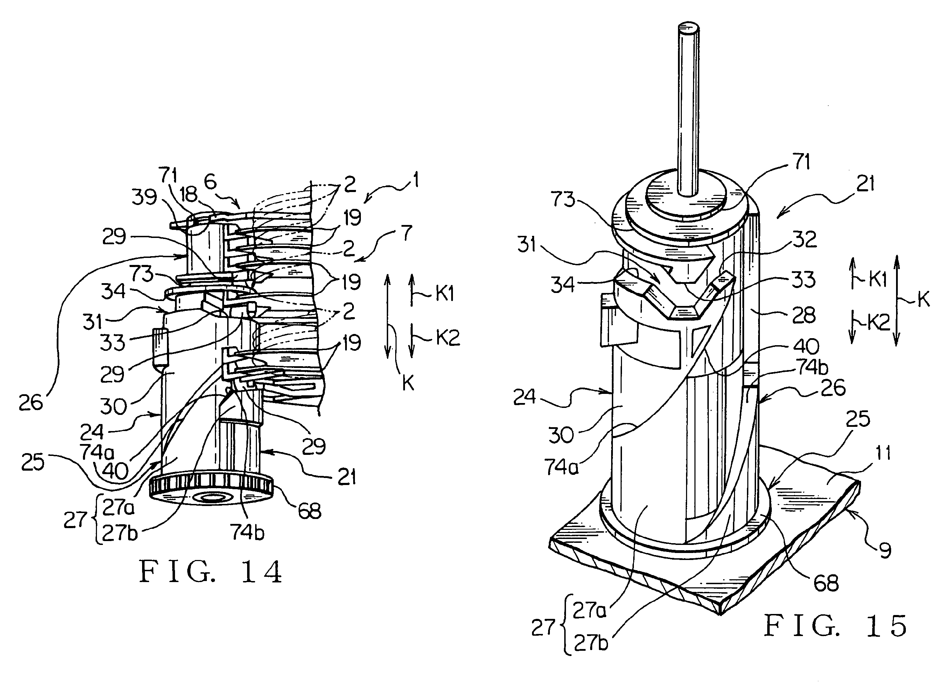

As shown in Figs. 15 to 18, the moving member 26 is formed in a circular pipe shape, and attached to the outer periphery of the rotating member 25 coaxially. The moving member 26 and the rotating member 25 are attached to each other with a key composed of a projection 70 mounted on the rotating member 25 and a key groove mounted on the moving member 26. The moving member 26 is attached to the rotating member 25 movably along the arrow K. The moving member 26 is movable along the arrow K independently from the cam member 24. Further, a locking groove 71 is disposed on an edge (top end) of the moving member 26 away from the bottom wall 11. The moving member 26 and the rotating member 25 are integrally rotated about the shaft thereof.

Further, as shown in Figs. 19 to 33, the moving chassis 18 as a first wall is attached to the rotating member 25 and the moving member 26, and a second wall 27 as sliding part is mounted on the rotating member 25 and the moving member 26. The second wall 27 is away from a later-described connecting wall 28, and includes slope walls 74a, 74b. These slope walls 74a, 74b correspond to the sliding walls on which the projection 29 of the holder 19 slides. The second wall 27 is composed of a second wall 27a as a first sliding wall, and a second wall 27b as a second sliding wall. The moving chassis 18 and the second wall 27 are disposed on both edges respectively of the moving member 26 in the shaft direction, having a specific interval along the shaft which is parallel to the arrow K. The moving chassis 18 and the second wall 27b are projected outward in a radial direction from both edges of the moving member 26.

The moving member 26 is attached to the moving chassis 18 by the locking groove 71 that is mounted on the fixed chassis 9 away from the bottom wall 11. This is described in this specification that the moving chassis 18 as the first wall is mounted on an upper end of the moving member 26. Thus, the moving member 26 and the moving chassis 18 are integrally moved along the arrow K. Further, the moving chassis 18 allows the moving member 26 to rotate about the shaft thereof. The moving chassis 18 is formed in a plate shape extended in a direction perpendicular to the arrow K.

The second wall 27a is mounted on the rotating member 25, and the second wall 27b is mounted on the moving member 26. As shown in Figs. 15 to 18, in the rotating member 25, the second wall 27a is extended vertically from an outer edge of the disk part 68, and a cross-section of the second wall 27a is formed in an arc shape about the shaft of the rotating member 25. Thus, the second wall 27a is arranged in an outer circumference of the disk part 68. Further, the second wall 27a includes a first slope wall 74a partially composing the slope walls 74a, 74b.

In the moving member 26, as shown in Figs. 15 to 18, the second wall 27b is disposed on an edge of the fixed chassis 9 next to the bottom wall 11 (namely, a bottom end of the moving member 26). The second wall 27b is arranged in an outer circumference of the moving member 26, and coaxially with the moving member 26. The second wall 27b is interposed between the later-described connecting wall 28 and the second wall 27a, and moved along with the moving member 26 along the arrow K. Further, The second wall 27b includes the second slope wall 74b partially composing the slope walls 74a, 74b. When the moving member 26 moves a specific distance upward along the arrow K relative to the rotating member 25, the second wall 27b is escaped from a state where the second wall 27b is interposed between the later-described connecting wall 28 and the second wall 27a, and the first and the second slope walls 74a, 74b of the second walls 27a, 27b are arranged in a same plane between the rotating member 25 and the moving member 26. As the second walls 27a, 27b are extended from the moving member 26 to the rotating member 25, the second walls 27a, 27b are away from the moving chassis 18, and extended in both the arrow K and the direction perpendicular to the arrow K. Further, when the upper second wall 27b moves downward with the moving member 26 to be interposed between the second wall 27a and the connecting wall 28, the first and the second slope walls 74a, 74b are not arranged in the same plane. Namely, the slope walls 74a, 74b are divided. Namely, the first and second slope walls 74a, 74b correspond to divided sliding walls in this specification.

In an area between the moving chassis 18 and the second wall 27, in an area where a later-described wedge part 30 of the cam member 24 is not positioned in between the moving chassis 18 and the second wall 27 along the arrow K, an interval between the moving chassis 18 and the second wall 27 is equal to or substantially equal to the product of the number of the holders 19 and a width of the projection 29 in the direction of the arrow K.

The rotating member 25 and the moving member 26 supports the holder 19 by positioning the projection 29 between the moving chassis 18 and the second wall 27. Further, by rotating about the shaft, the rotating member 25 and the moving member 26 allows the projection 29 to move in a direction perpendicular to the arrow K in a manner to move away from a later-described connecting wall 28 in between the moving chassis 18 and the second wall 27. Therefore, the cam member 24, the rotating member 25, and the moving member 26 are moved by the driving force of the motor 20 in a direction where the projection 29 is inserted into later-described spaced grooves 39, 40. Further, the cam member 24, the rotating member 25, and the moving member 26 position the projections 29 of all the holders 19 in between the moving chassis 18 and the second wall 27 at a later-described receiving position.

As shown in Figs. 15 to 18, the cam member 24 is formed in a circular pipe shape, attached to an outer circumference of the moving member 26, and arranged coaxially with the rotating member 25, the moving member 26 and the like. The cam member 24 and the moving member 26 are attached to each other with a key composed of projections 72 mounted on the cam member 24 and a projection mounted on the moving member 26. The cam member 24 is attached to the moving member 26 movably along the arrow K. The cam member 24 is rotated integrally with the rotating member 25 and the moving member 26 about the shaft.

Further, a locking groove 73 is disposed on the cam member 24 away from the bottom wall 11. The moving chassis 16 of the playback part 5 is locked and attached to the locking groove 73 of the cam member 24. Therefore, the cam member 24 is moved integrally with the moving chassis 16, namely the optical pickup 66, along the arrow K Thus, the cam member 24 is movable along the arrow K. Further, the moving chassis 16 allows the cam member 24 and the like to rotate about the shaft.

Further, the cam member 24 includes the wedge part 30, a guiding groove 31, and the connecting wall 28. The wedge part 30 is interposed between the moving chassis 18 and the second wall 27, and arranged with a gap to the connecting wall 28. Thus, the wedge part 30 of the cam member 24 is moved between the moving chassis 18 and the second walls 27 along the arrow K. The wedge part 30 is formed in a manner that as moving toward the connecting wall 28, an angle of the wedge part 30 becomes acute.

The guiding groove 31 is mounted on the wedge part 30. The guiding groove 31 is formed on an outer circumference of the wedge part 30 of the cam member 24. Namely, the guiding groove 31 is a concave on the outer circumference of the wedge part 30. The groove width of the guiding groove 31 is substantially equal to a width of the projection 29 along the arrow K. As shown in Figs. 19 to 33, the guiding groove 31 includes an opening part 32 facing the connecting wall 28, a loading part 33, a pickup insertion part 34, a first connecting part 35, a clamp part 36, a second connecting part 37, a playback part 38. The loading part 33, the pickup insertion part 34, the clamp part 36, the playback part 38 are extended in a direction perpendicular to the arrow K. The first connecting part 35 and the second connecting part 37 are extended in a direction perpendicular to both the arrow K and the direction perpendicular to the arrow K.

The loading part 33 is continued to the opening part 32, and disposed on the opening part 32 away from the connecting wall 28. The pickup part 34 is continued to the loading part 33, and disposed on the loading part 33 away from the connecting wall 28. The pickup insertion part 34 is positioned farther than the loading part 33 from the second wall 27a of the rotating member 25.

The first connecting part 35 is continued to the pickup insertion part 34, and disposed on the pickup insertion part 34 away from the connecting wall 28. As the first connecting part 35 is removed from the pickup insertion part 34, the first connecting part 35 is extended nearer the second wall 27a of the rotating member 25. The clamp part 36 is connected to the first connecting part 35, and disposed on the first connecting part 35 away from the connecting wall 28. The second connecting part 37 is connected to the clamp part 36, and disposed on the clamp part 36 away from the connecting wall 28. As the second connecting part 37 is removed from the clamp part 36, the second connecting part 37 is extended nearer the second wall 27a of the rotating member 25. The playback part 38 is connected to the second connecting part 37, and disposed on the second connecting part 37 away from the connecting wall 28.

The guiding groove 31 allows the projection 29 to be inserted through the opening part 32. Namely, the projection 29, namely, the holder 19 is slidable in the guiding groove 31. Further, the guiding groove 31 allows the projection 29 to move sequentially into the loading part 33, the pickup insertion part 34, the first connecting part 35, the clamp part 36, the second connecting part 37, and the playback part 38.

The holder 19 having the projection 29 positioned in the loading part 33 faces the frame 10 along the arrow Y. The holder 19 having the projection 29 positioned in the loading part 33 can hold the CD 2 inserted through the slot 10, and eject the CD 2 through the slot 10 out of the main body of the playback apparatus 3.

The holder 19 having the projection 29 positioned in the pickup insertion part 34 is removed from the other holders 19 disposed on the bottom of Fig. 6 and allows the other end of the swinging chassis 17, namely the pickup playback part to be inserted between the holders 19 disposed on the bottom of Fig. 3. The holder 19 having the projection 29 positioned in the clamp part 36 allows the turntable of the playback part 5 to clamp the CD 2 held by the holder 19. The holder 19 having the projection 29 positioned in the playback part 38 is removed from the CD 2 clamped by the turntable, and does not interfere with the CD 2 rotated by the turntable. Namely, the holder 19 allows the CD 2 to be rotated.

The connecting wall 28 is extended in a straight line along the arrow K. The connecting wall 28 faces the opening part 32 of the guiding groove 31 disposed on the wedge part 30 with a gap in a direction perpendicular to the arrow K. The connecting wall 28 is formed by connecting the moving chassis 18 and the second wall 27b to each other.

Thus, the cam member 24 includes the guiding groove 31 with which the projection 29 slidably engaged, said projection of which the holder 19 holds one CD 2.

As shown in Fig. 15, the rotating member 25, the moving member 26, and the cam member 24 are arranged coaxially. As shown in Figs. 15 to 17, the moving member 26 and the cam member 24 are movable along the arrow K independently from each other.

Further, a first spaced groove 39 is a groove between the moving chassis 18 and the wedge part 30 of the cam member 24. The first spaced groove 39 is composed of the moving chassis 18, and a top plate of the wedge part 30 away from the bottom wall 11. The first spaced groove 39 is engaged with the other holders 19 upper (the arrow K1 side) than the holder holding the one CD 2 engaging with the guiding groove 31.

Further, a second spaced groove 40 is a groove between the second wall 27 and the wedge part 30 of the cam member 24. The second spaced groove 40 is composed of the slope walls 74a, 74b of the second wall 27 and a lower wall of the wedge part 30 near the bottom wall 11. The second spaced groove 40 is engaged with the other holders lower (the arrow K2 side) than the holder holding the one CD 2 engaging with the guiding groove 31. Incidentally, as described below, a groove length of the second spaced groove 40 when the projection 29 of the holder 19 is positioned on the playback part 38 of the guiding groove 31 and a groove length of the second spaced groove 40 when the projection 29 is positioned on the loading part 33 of the guiding groove 31 are different from each other. The groove length when the projection 29 is positioned on the loading part 33 is shorter than that when the projection 29 is positioned on the playback part 38.

The projection 29 of the holders 19 other than the holder holding the one CD 2 engaging with the guiding groove 31 can be inserted into between the first spaced groove 39 and the second spaced groove 40. Spaced grooves in this description are the first spaced groove 39 and the second spaced groove 40. The first spaced groove 39 and the second spaced groove 40, namely, the spaced grooves are made by slidably engaging the holders other than the holder holding the one CD 2, and moving the cam member 24 and the moving member 26 relative to each other.

An interval between the first spaced groove 39 and the second spaced groove 40 are varied because the cam member 24 and the moving member are relatively moved along the arrow K. Namely, moving the cam member 24 and the moving member 26 relative to each other varies the gaps of the first spaced groove 39 and the second spaced groove 40 along the direction K. When the cam member 24 is slid along the arrow K, the gap of the first spaced groove 39 is increased and the gap of the second spaced groove 40 is decreased, or vice versa.

Further, the sum of the gaps of the first spaced groove 39 and the second spaced groove 40 is equal to or substantially equal to the product of the number of the number of the holders 19 minus one and a width of the projection 29 in the direction of the arrow K.

According to the above, among the projections 29 of all the holders 19 between the moving chassis 18 and the second wall 27, one projection 29 is inserted into the guiding groove 31 by transmitting the driving force of the motor 20 through a plurality of the gears 67 and integrally rotating the rotating member 25, the moving member 26 and the cam member 24. As shown in Fig. 10, the projections 29 of the holders 19 nearer the arrow K1 side than the projection 29 inserted into the guiding groove 31 are inserted into the first spaced groove 39, and the projections 29 of the holders nearer the arrow K2 than the projection 29 inserted into the guiding groove 31 are inserted into the second spaced groove 40. Incidentally, the arrow K1 is one side of the arrow K and the arrow K2 is the other side of the arrow K

In this description, the state that the projections 29 of all the holders 19 are not inserted into the guiding groove 31, but moved toward the connecting wall 28 and interposed between the moving chassis 18 and the second walls 27 is defined as that the holders 19 are positioned in a receiving position. In the receiving position, because the wedge part 30 of the cam member 24 is spaced with the connecting wall 28, the first spaced groove 39 and the second spaced groove 40 are integrated with each other. Further, in the receiving position, the holders 19 are close to each other.

In this description, a state that the projection 29 is inserted into the playback part 38 of the guiding groove 31 and insides of the first spaced groove 39 and the second spaced groove 40 is defined as that the holder 19 is in a playback position. In the playback position, owing to the wedge part 30 of the cam member 24, the holder 19 of which projection 29 is inserted into the guiding groove 31 is removed from the other holders in the receiving position. In the playback position, the holder holding the CD 2 to be played back is removed from the other holders 19, and the optical pickup 66 can be inserted into between the holder holding the CD 2 to be played back and the other holders 19.

A state that the projection 29 is interposed between the second wall 27b of the moving member 26 and the moving chassis 18, and inserted into the loading part 33, the first spaced groove 39, and the second spaced groove 40 is defined as that the holder 19 is in a loading position.

Further, in the playback position, the projections 29 of the holders 19 at the arrow K1 side from the holder 19 holding the CD 2 to be played back are inserted into the first spaced groove 39. The first spaced groove 39 removes the holders at the arrow K1 side from the holder 19 holding the CD 2 to be played back.

Further, in the playback and loading positions, the projections 29 of the holders 19 at the arrow K2 side from the holder 19 holding the CD 2 to be played back are inserted into the second spaced groove 40. The second spaced groove 40 removes the holders at the arrow K2 side from the holder 19 holding the CD 2 to be played back.

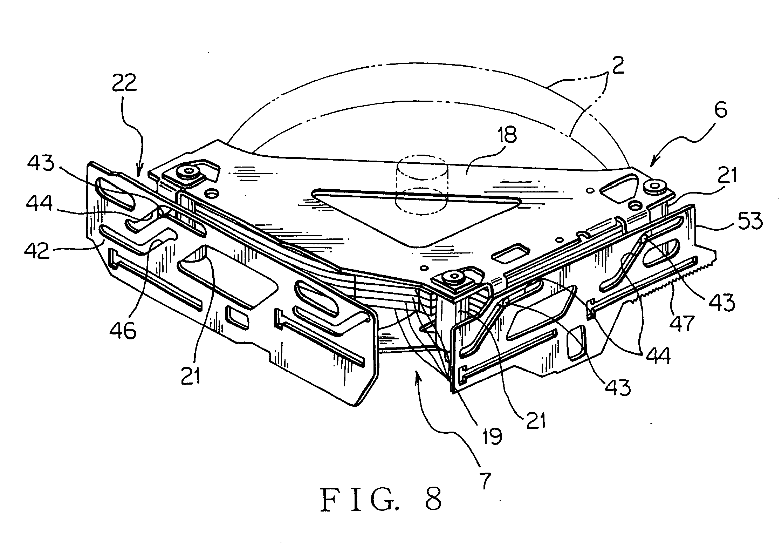

As shown in Fig. 34, the cooperative moving mechanism 22 includes the motor 41 (shown in Fig. 7), a driving chassis 42 (shown in Figs. 7 and 8), a second driving chassis 53 (shown in Figs. 7 and 8), first projections 43, first holes 44, a second projection 45, and a second hole 46. In Fig. 7, two driving chassis 42 and two second driving chassis 53 are shown. However, actually, one driving chassis 42 and one second driving chassis 53 are mounted.

In the cooperative moving mechanism 22, when the holders 19 in the disk receiver 6 are moved from the receiving position to the playback position, the moving member 26 is moved along the arrow K relative to the rotating member 25 so as to locate the moving member 26 the farthest away from the second wall 27a of the rotating member 25. In this case, the slope walls 27a, 27b of the second walls 27a, 27b are arranged in a same plane. Then, the cooperative moving mechanism 22 positions the cam member 24 to the position where the projection 29 of the holders 19 holding the CD 2 to be positioned in a playback position is allowed to be inserted into the guiding groove 31.

When the holders 19 in the disk receiver 6 are moved between the playback position and the loading position, namely, when the CD 2 is inserted into or removed from the main body, the cooperative moving mechanism 22 moves the cam member 24 relative to the moving member 26 along the arrow K to position the cam member 24 at the closest position to the second wall 27a of the rotating member 25. Then, the cooperative moving mechanism 22 positions the moving member 26 at a position where the projection 29 of the holders 19 holding the CD 2 which is positioned at the loading position can be inserted into the guiding groove 31. Owing to the driving force of the motor 41, the cooperative moving mechanism 22 moves the cam member 24, namely the moving chassis 16 of the playback part 5, and the moving member 26, namely the moving chassis 18 of the disk receiver 6 together along the arrow K. Incidentally, the cooperative moving mechanism 22 corresponds to a transporting device for the sliding part.

The motor 41 is attached to such as the bottom wall 11 of the fixed chassis 9. The driving chassis 42 is made of such as metal plate, and formed in a plate shape. In a plan view, the driving chassis 42 is in a rectangular shape. The side walls 12 of the fixed chassis 9 of the main body of the playback apparatus 3 support the driving chassis 42 movably in a direction perpendicular to the arrow K.

The second driving chassis 53 is made of metal plate, and formed in a plate shape. In a plan view, the second driving chassis 53 is in a rectangular shape. The side walls 12 of the fixed chassis 9 of the main body of the playback apparatus 3 support the second driving chassis 53 movably in a direction perpendicular to the arrow K. Gears 48 rotated by the driving force of the motor 41 and a rack 47 engaged with the gears 48 are formed in the second driving chassis 53.

The first projections 43 are projected from the moving chassis 18 of the disk receiver 6 toward the driving chassis 42 and the second driving chassis 53. The first holes 44 are mounted on the driving chassis 42 and the second driving chassis 53. Of course, the first holes 44 penetrate the driving chassis 42 and the second driving chassis 53. As shown in Fig. 8, the first projections 43 are inserted into the first holes 44.

As shown in Figs. 34 to 41, each first hole 44 includes a first parallel part 49 and a first slope part 50. The first parallel part 49 is extended straightly in a direction perpendicular to the arrow K. The first slope part 50 is continued to an end of the first parallel part 49 and extended straightly in a direction perpendicular to both the arrow K and the direction perpendicular to the arrow K The first slope part 50 is inclined in a direction from the first parallel part 49 to the second wall 27 of the rotating member 25.

The second projection 45 projects from the moving chassis 16 of the playback part 5 to the driving chassis 42. The second hole 46 is mounted on the driving chassis 42. Of course, the second hole 46 penetrates the driving chassis 42.

The second hole 46 includes a second slope part 51 and a second parallel part 52. The second slope part 51 is extended straightly in a direction perpendicular to both the arrow K and the direction perpendicular to the arrow K. The second slope part 51 is inclined in a direction from the first parallel part 49 to the second wall 27 of the rotating member 25. The second slope part 51 is parallel to the first slope part 50. The second parallel part 52 is continued to an end of the second slope part 51 and extended straightly in a direction perpendicular to the arrow K.

When the first projections 43 are positioned in the first slope parts 50, the second projection 45 is positioned in the second parallel part 52. When the first projections 43 are positioned in the first parallel parts 49, the second projection 45 is positioned in the second slope part 51.

The cooperative moving mechanism 22 is moved on the second driving chassis 53 in a direction perpendicular to the arrow K by the driving force of the motor 41. Then, the first projections 43 are inserted into the first holes 44 of the second driving chassis 53, and the moving chassis 18 moves along the arrow K relative to the second driving chassis 53. Then, the first projections 43 move in the first holes 44 of the driving chassis 42, and the driving chassis 42 moves in a direction perpendicular to the arrow K.

Thus, the second driving chassis 53 is slid in a direction perpendicular to the direction of the arrow K by the driving force of the motor 41, so that the driving chassis 42 is slid in a direction perpendicular to the direction of the arrow K. Namely, the driving chassis 42 is moved relative to the side walls 12 of the fixed chassis 9 in a direction perpendicular to the direction of the arrow K by the driving force of the motor 41. For this purpose, the cooperative moving mechanism 22, namely the separating mechanism 7 includes the motor 41 as a single driving source for moving the cam member 24 and the moving member 26 along the arrow K.

The cooperative moving mechanism 22 positions the driving chassis 42 at a position where the second projection 45 is moved in the second parallel part 52, and the first projections 43 is moved in the first slope part 50 by the driving force of the motor 41, when positioning the holders 19 at the loading position, namely, when inserting or removing the CD 2 from the main body of the playback apparatus 3. The cooperative moving mechanism 22 positions the driving chassis 42 at a position where the second projection 45 is moved in the second slope part 51, and the first projections 43 is moved in the first parallel part 49, when moving the holders 19 between the playback and receiving positions.

When the cooperative moving mechanism 22 positions the second projection 45 in the second parallel part 52, the cam member 24 is at the closest position to the second walls 27 of the rotating member 25. The holder 19, of which projection 29 is positioned inside the loading part 33 of the guiding groove 31 of the cam member 24 at the closest position to the second wall 27a of the rotating member 25, is positioned to a position where the holder 19 can hold the CD 2 to be inserted or removed through the slot 10.

When the CD changer 1 reads the data out of the CD 2 selected from the CDs 2 received in the main body of the playback apparatus 3 by such as an operation part, as shown in Fig. 19, all the projections 29 of the holders 19 are contacted with the connecting wall 28 by the driving force of the motor 20. Further, the other end of the swinging chassis 17 of the playback part 5, namely the turntable and the pickup playback part, is saved from the CD 2. As shown in Fig. 34, the driving chassis 42 is positioned on a position where the first projections 43 are positioned in the first parallel part 49 of the first holes 44 by the driving force of the motor 41. Then, as shown in Fig. 19, the moving chassis 18 is moved the farthest away from the second wall 27a of the rotating member 25.

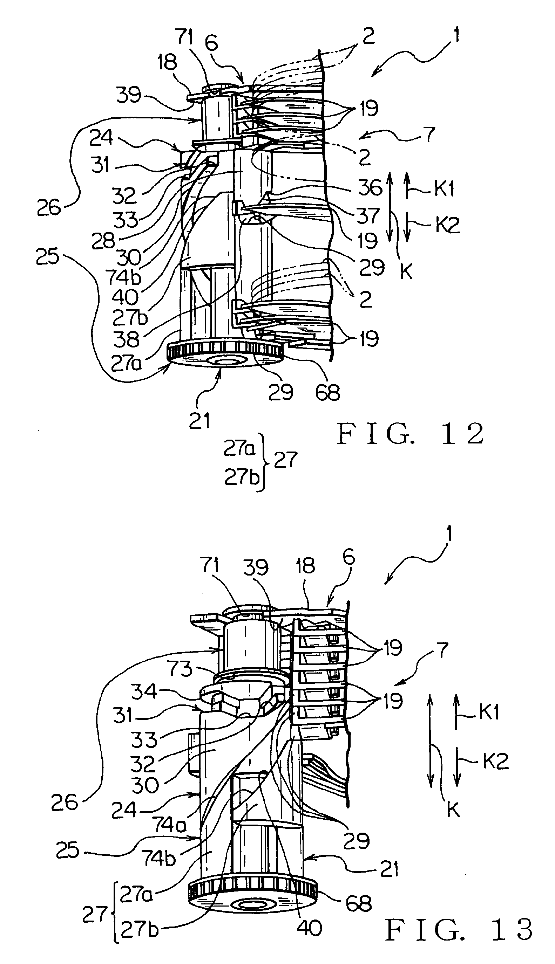

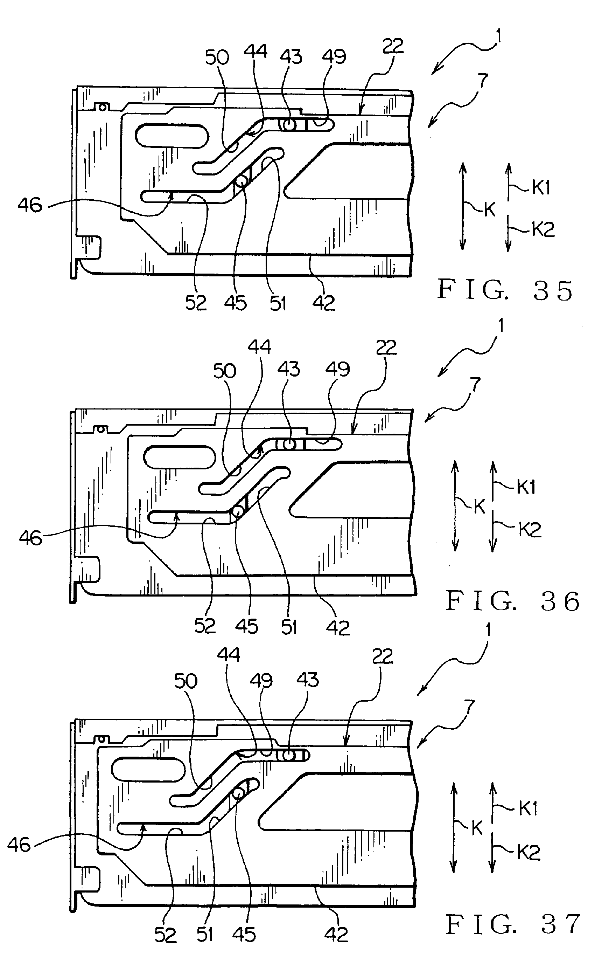

Then, owing to the driving force of the motor 41, as shown in Fig. 35, the second projection 45 is moved in the second slope part 51 so that the driving chassis 42 is positioned on a position where the projection 29 of the holder 19 having the CD 2 selected for reading out the data faces the guiding groove 31 in a direction perpendicular to the arrow K. Then, as shown in Figs. 11 and 20, the the guiding groove 31 of the cam member 24 faces the projection 29 of the holder 19 holding the CD 2 selected for reading out the data in a direction perpendicular to the arrow K. Incidentally, in Figs. 11 and 20, the projection 29 of the fourth holder 19 from the top faces the guiding groove 31 formed on the cam member 24.

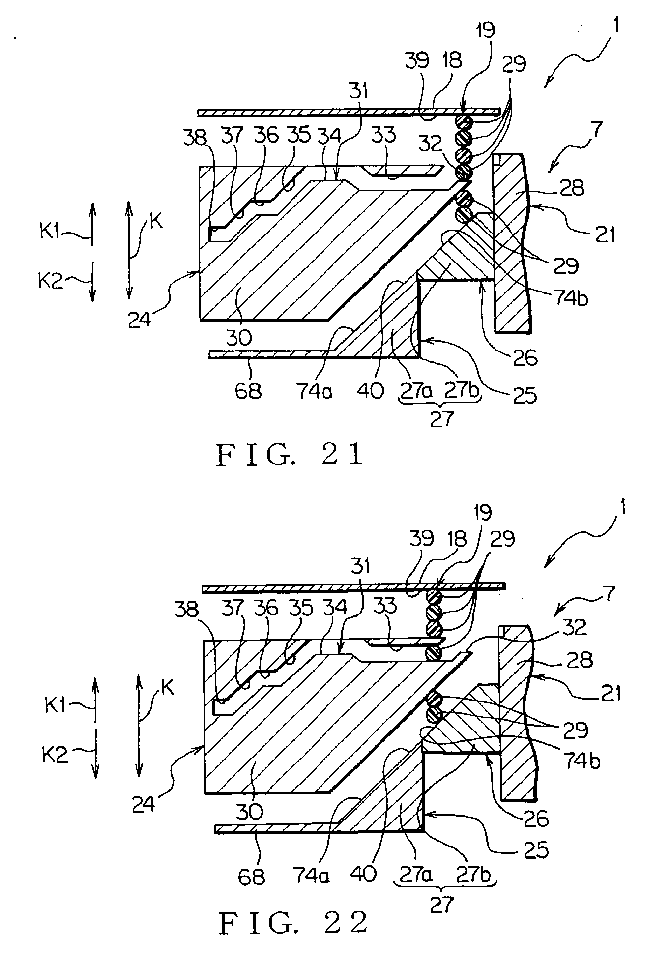

Then, owing to the driving force of the motor 20, the rotating member 25, the moving member 26, and the cam member 24 are integrally rotated. Then, the projections 29 of all the holders 19 are gradually removed from the connecting wall 28. Then, as shown in Fig. 21, the projection 29 of the holder 19 holding the CD 2 selected for reading out the data is inserted into the opening part 32 of the guiding groove 31. Further, the projections 29 of the holders 19 holding the other CDs 2 contact the wedge part 30 of the cam member 24, and moved in the first spaced groove 39 and the second spaced groove 40. Incidentally, they are moved along the first and the second slope walls 74a, 74b which are arranged in a same plane in the second spaced groove 40.

Further, as shown in Fig. 22, when the rotating member 25, the moving member 26, and the cam member 24 are rotated owing to the driving force of the motor 20, the projection of the holder 19 holding the CD 2 selected for reading out the data is positioned in the loading part 33.

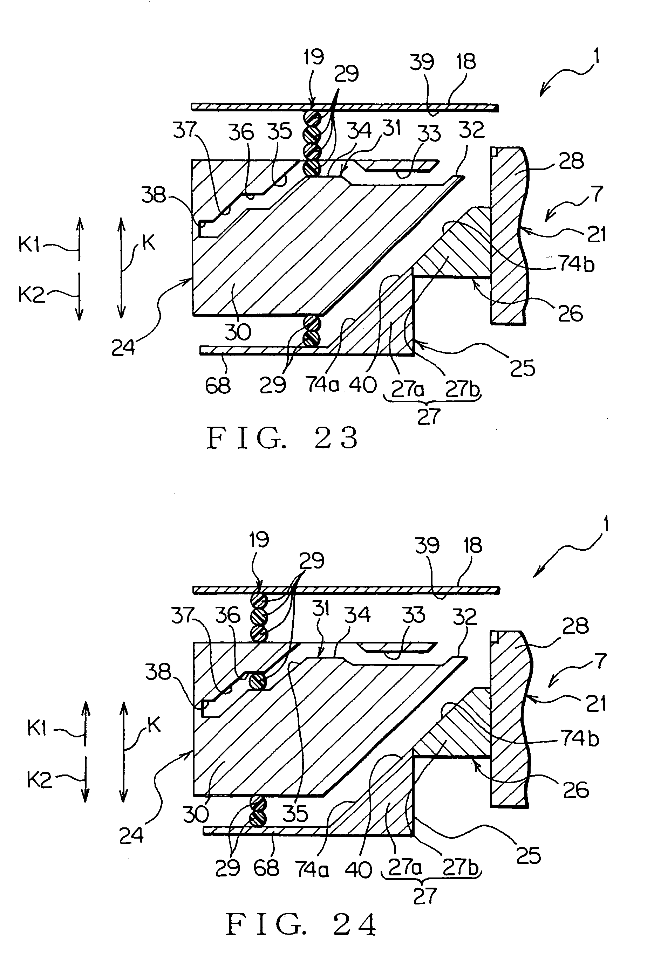

Then, as shown in Fig. 23, the projection 29 of the holder 19 holding the selected CD 2 is positioned on the pickup insertion part 34 of the guiding groove 31. At this time, the swinging chassis 17 is rotated about the one end thereof, and the other end of the swinging chassis 17, namely the turntable and the pickup playback part, is inserted between the selected CD 2 and the other CDs 2.

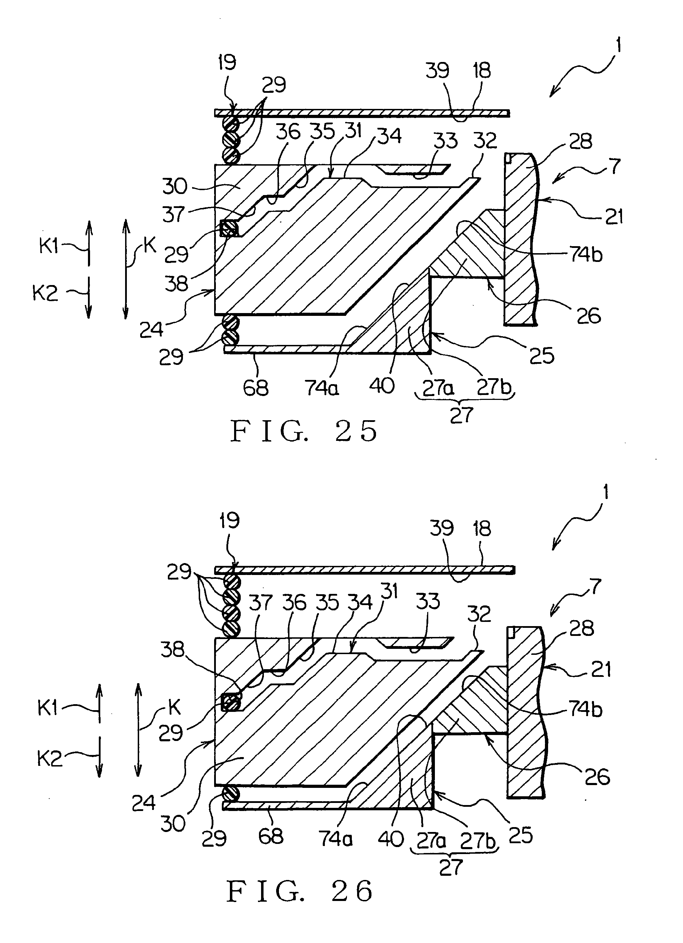

Then, the projection 29 of the holder 19 holding the selected CD 2 is passed through the first connecting part 35, and positioned in the clamp part 36. At this time, the turntable of the playback part 5 clamps the selected CD 2. Then, the projection 29 of the holder 19 holding the selected CD 2 is passed through the second connecting part 37, and as shown in Figs. 12 and 25, positioned in the playback part 38.

Further, the projections 29 of the holders 19 holding the CDs 2 at the arrow K1 side are moved to an inner part of the first spaced groove 39, namely away from the connecting wall 28 owing to the wedge part 30 of the cam member 24. Further, the projections 29 of the holders 19 holding the CDs 2 at the arrow K2 side are moved to an inner part of the second spaced groove 40, namely away from the connecting wall 28 by sliding along the first and the second slope walls 74a, 74b which is arranged in a same plane.

Then, as shown in Figs. 12 and 25, the guiding groove 31 mounted on the wedge part 30 of the cam member 24 positions the holder 19 holding the selected CD 2. Further, the wedge part 30 of the cam member 24, the moving chassis 18, and the second walls 27, namely the first spaced groove 39 and the second spaced groove 40, remove the holder 19 holding the selected CD 2 from the other holders 19. Further, the first spaced groove 39 and the second spaced groove 40 positions the other holders 19.

Further, when the projection 29 of the holder 19 holding the selected CD 2 is positioned in the playback part 38, the holder 19 is moved away from the CD 2 clamped by the turntable of the playback part 5. Thus, the rotation of the CD 2 is prevented from being disturbed by the holder 19. As the turntable rotates the clamped CD 2, the optical pickup 66 of the pickup playback part reads the data from a desired position of the CD 2. When stopping the readout from the selected CD 2, the driving force of the motor 20 rotates the rotating member 25, the moving member 26, and the cam member 24 reversely.

As described the above, the separating mechanism 7 moves the cam member 24 along the arrow K, and expands or contracts the groove widths of the first spaced groove 39 and the second spaced groove 40, so that the separating mechanism 7 positions the holder 19 holding the desired CD 2, and moves the holder 19 away from the other holders 19. Thus, the separating mechanism 7 separates the holder 19 holding the selected CD 2 from the other holders 19 along the arrow K

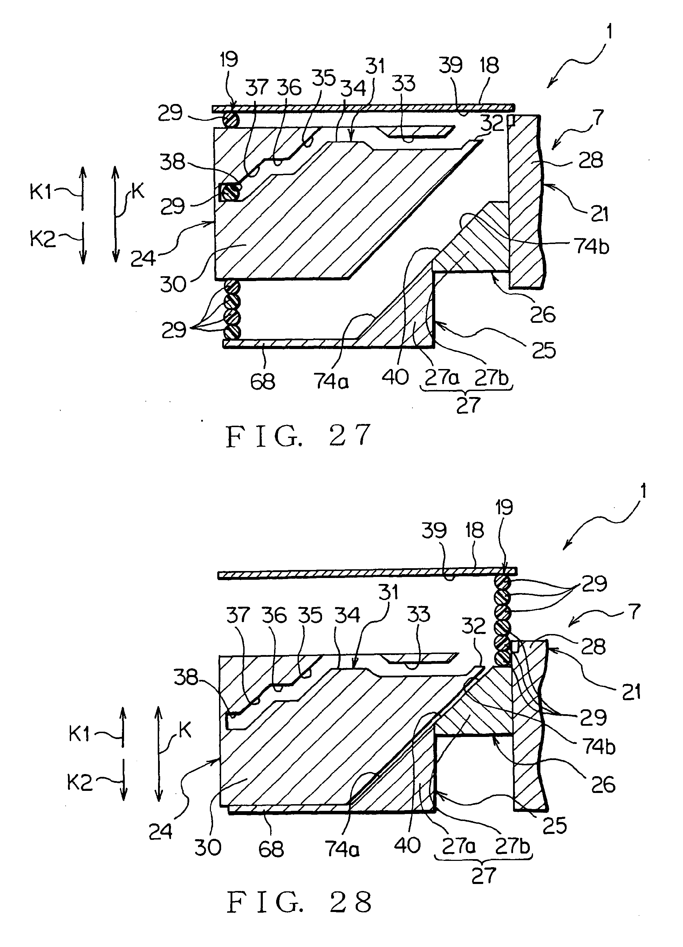

For example, as shown in Fig. 26, in a case when positioning the holder holding the second CD 2 from the bottom at the playback position, or as shown in Fig. 27, in a case that the holder holding the second CD 2 from the top at the playback position, the separating mechanism 7 separates in a similar manner. Incidentally, in cases shown in Figs. 26 and 27, the first projections 43 is positioned in the first parallel part 49 as shown in Figs. 36 and 37, and the second projection 45 is positioned in the second slope part 51.

Further, the CD changer 1 ejects the selected CD 2 from the main body of the playback apparatus 3 according to instructions from such as an operating part. As shown in Figs. 10, 13, and 28, when inserting the CD 2 into the main body of the playback apparatus 3 and making the selected holder 19 hold the CD 2, the CD changer 1 contacts the projections 29 of all the holders 19 with the connecting wall 28 by the driving force of the motor 20. Further, the other end of the swinging chassis 17 of the playback part 5, namely the turntable and the pickup playback part, is saved from the CDs 2.

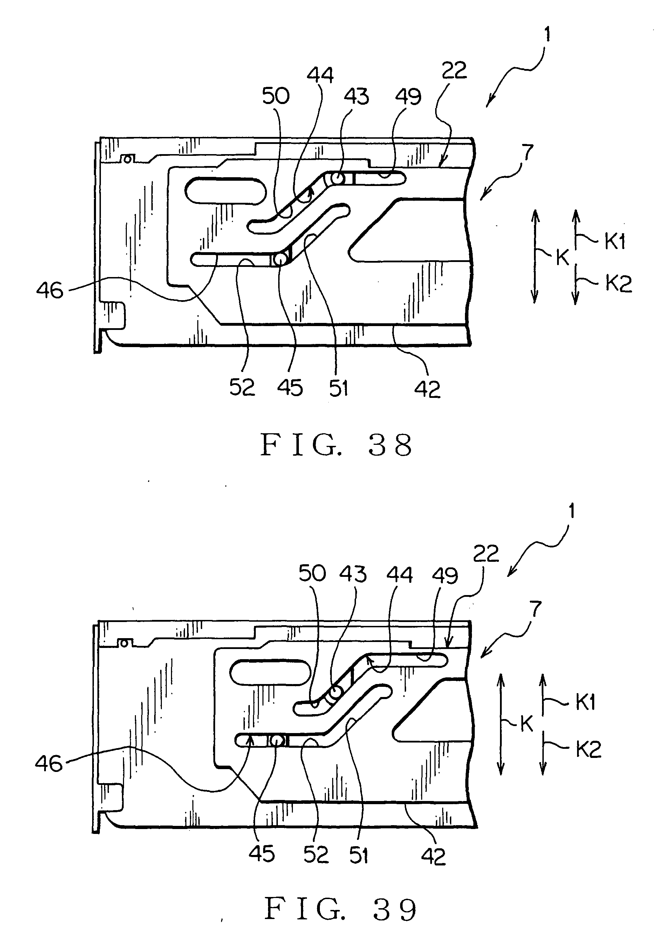

Then, as shown in Fig. 38, the driving chassis 42 is positioned in a manner that the second projection 45 is positioned in the second parallel part 52 of the second hole 46 by the driving force of the motor 41. Then, as shown in Figs. 10, 13 and 28, the cam member 24 is moved the closest to the second wall 27a of the rotating member 25.

As shown in Fig. 39, owing to the driving force of the motor 41, the first projections 43 is moved in the first slope part 50 of the first holes 44, so that the driving chassis 42 is positioned in a position where the projection 29, of the holder 19 of which CD 2 is to be ejected, faces the 32 of the guiding groove 31 along the direction perpendicular to the arrow K. At this time, the second slope wall 74b of the second wall 27a, which is arranged in a same plane with the second slope wall 74a, is moved along with the moving member 26 moving downward. Then, a part of the slope walls 74a, 74b is divided.

Then, as shown in Figs. 10, 13, and 29, the guiding groove 31 of the cam member 24 faces the projection 29 of the selected holder 19 in a direction perpendicular to the arrow K. Incidentally, in Figs. 10, 13, and 29, the projection 29 of the fourth holder 19 from the top faces the guiding groove 31 mounted on the cam member 24.

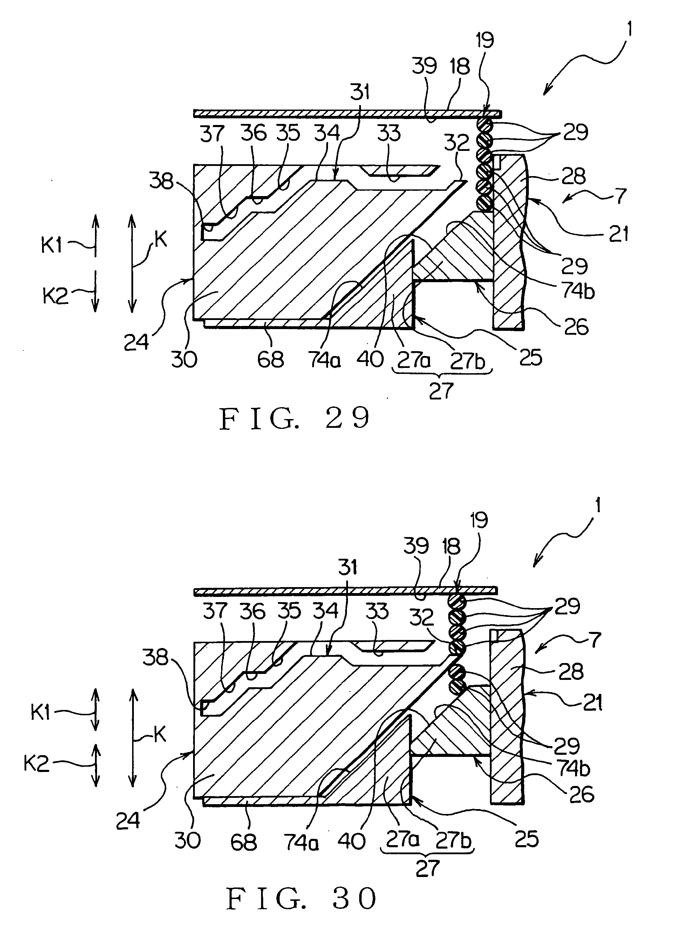

Then, the driving force of the motor 20 integrally rotates the rotating member 25, the moving member 26, and the cam member 24. Then, the projections 29 of all the holders 19 are gradually removed from the connecting wall 28. Then, as shown in Fig. 30, the projection 29 of the selected holder 19 is inserted into the opening part 32 of the guiding groove 31. Further, the projections 29 of the other holders 19 contact the wedge part 30 of the cam member 24, and are moved in the first spaced groove 39 and the second spaced groove 40. Incidentally, the groove length of the second spaced groove 40 is shorter than that when the projection 29 is positioned on the playback part 38. The groove length is only a length of the second slope wall 74b of the second wall 27b. Therefore, an unnecessary second spaced groove 40 can be deleted. Namely, because the slope walls 74a, 74b are divided by moving downward the second wall 27b having the second slope wall 74b for sliding the other holders, the first slope wall 74a which is unnecessary for transporting the recording media (CD 2) is not moved downward, and a thickness in a height direction Z of the apparatus is not increased.

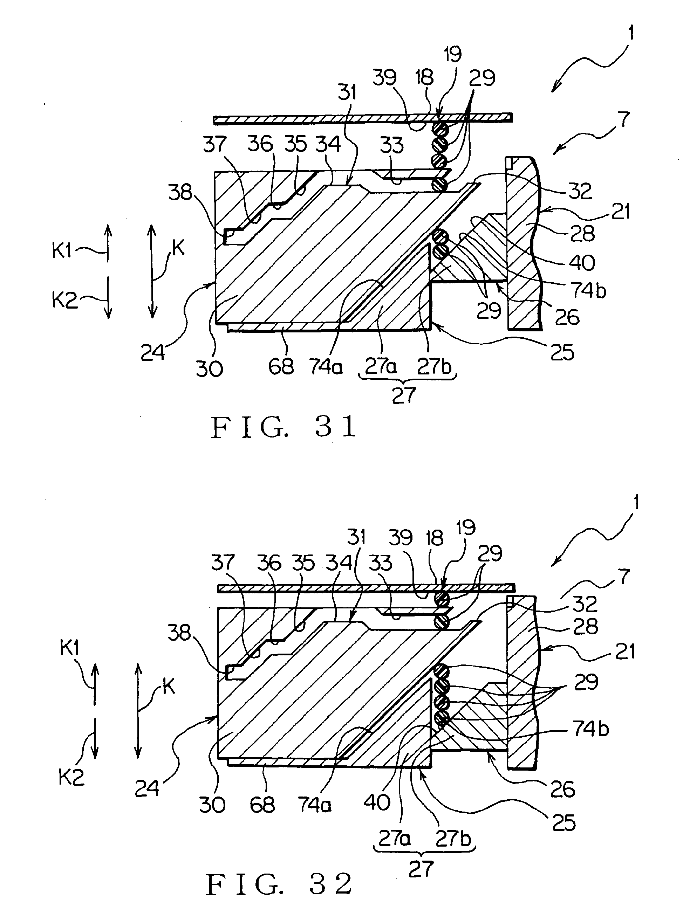

As shown in Figs. 14 and 31, when the driving force of the motor 20 integrally rotates the rotating member 25, the moving member 26, and the cam member 24, the projection 29 of the selected holder 19 is positioned in the loading part 33 of the guiding groove 31. Further, the wedge part 30 of the cam member 24 moves the projections 29 of the other holders 19 to inner parts of the first spaced groove 39 and the second spaced groove 40. In the second spaced groove 40, the projections 29 are slid along the second slope wall 74b of the second wall 27b.

Then, as shown in Figs. 14 and 31, the guiding groove 31 mounted on the wedge part 30 of the cam member 24 positions the selected holder 19 on the loading position. Further, the wedge part 30 of the cam member 24, the moving chassis 18, and the second walls 27, namely the first spaced groove 39 and the second spaced groove 40, removes the selected holder 19 from the other holders 19. Further, the first spaced groove 39 and the second spaced groove 40 positions the other holders 19.

Then, the driving force of the motor 41 rotates the roller 14 in a direction corresponding to loading or unloading of the CD 2. The CD 2 is loaded or unloaded into the main body of the playback apparatus 3 through the slot 10 by the rotation of the roller 14. When stopping the loading and unloading of the CD 2, the rotation of the roller 14 is stopped and the driving force of the motor 20 rotates reversely the rotating member 25, the moving member 26, and the cam member 24.

As described the above, by moving the cam member 24 along the arrow K, expanding and contracting the groove widths of the wedge part 30 and the second spaced groove 40, the desired holder 19 is positioned on the loading position, and separated from the other holders 19. For example, as shown in Fig. 32, in a case when positioning the second holder 19 from the top on the loading position, or as shown in Fig. 33, in a case when positioning the second holder 19 from the bottom, the cam member 24 works in a similar way. Further, in cases shown in Figs. 32 and 33, the second projection 45 is positioned in the second parallel part 52 as shown in Figs. 40 and 41, and the first projections 43 is positioned in the first slope part 50.

According to the present embodiment, the projection 29 of the holders 19 holding the selected CD 2 is engaged with the guiding groove 31. The projections 29 of the holders at the arrow K1 side are engaged with the first spaced groove 39, and the projections 29 of the holders 19 at the arrow K2 side are engaged with the second spaced groove 40. Thus, the selected CD 2 is separated from the other CD 2, and the data from the selected CD is read out.

Further, the spaced groove expansion mechanism 21 varies the groove widths of the first spaced groove 39 and the second spaced groove 40 relatively. The sum of the groove widths of the first spaced groove 39 and the second spaced groove 40 is substantially equal to the product of the number of the holders 19 minus one by the width of the projection 29. Therefore, the holder 19 holding the selected CD 2 and the other holders 19 are positioned without any rattle.

Therefore, the spaced groove expansion mechanism 21 varies the groove widths of the first spaced groove 39 and the second spaced groove 40 relatively without mounting a coil spring, so that the holder 19 holding the selected CD 2 is separated from the other holders 19. Thereby, even when the CD changer 1 mounted on a vehicle is vibrated, the holders 19 is prevented from being vibrated. Therefore, the holder 19 holding the selected CD 2 is surely positioned on the playback position. Even when the vehicle is vibrated, the data on the CD 2 is surely read out.

The spaced groove expansion mechanism 21 includes the moving member 26 and the cam member 24 mounted on the moving member 26 movably along the arrow K. The first spaced groove 39 is formed between the moving chassis 18 mounted on the moving member 26 and the wedge part 30 of the cam member 24. The second spaced groove 40 is formed between the second walls 27 of the moving member 26 and the wedge part 30. The guiding groove 31 is formed on the wedge part 30 of the cam member 24.

Therefore, sliding the cam member 24 along the arrow K surely varies the groove widths of the first spaced groove 39 and the second spaced groove 40 relatively. Further, the cam member 24 slides according to the position of the holder 19 holding the selected CD 2. Therefore, the holder 19 holding the selected CD 2 is surely positioned on the playback position.

Because the cam member 24 and the optical pickup 66 are integrally moved, a relative position between the cam member 24 and the optical pickup 66 is kept constant. Therefore, the optical pickup 66 surely reads out the data from the CD 2 held by the holder 19 positioned on the playback position by the guiding groove 31 mounted on the cam member 24.

When reading out the data from the CD 2, the moving member 26 is moved toward the arrow K1 side, then the cam member 24 is slid corresponding to the position of the holder 19 holding the selected CD 2. Therefore, any CD 2 can be positioned on the playback position. Therefore, the data from any CD 2 can be read out.

Further, when loading or unloading the CD 2, the cam member 24 is moved toward the arrow K2, then the moving member 26 is slid corresponding to the positions of the cam member 24 and the holder 19 of the loaded or unloaded CD 2. Thus, a relative position between the holder 19 holding the loaded or unloaded CD 2 and the main body of the playback apparatus 3 is kept constant. Therefore, the CD 2 is surely loaded or unloaded through the slot 10, and the CD 2 inserted into the main body of the playback apparatus 3 is surely held by the holder 19.

Further, the cooperative moving mechanism 22 moves the holders 19 between the receiving position and the playback position, and positions the holder 19 at the loading position sequentially. Therefore, the number of the components and cost can be reduced. Further, two modes can be smoothly changed, one mode is moving the holders 19 between the receiving position and the playback position, and the other mode is loading or unloading the CD 2.

The cooperative moving mechanism 22 includes the driving chassis 42 having the first holes 44 and the second hole 46, the first projections 43 mounted on the moving chassis 18 of the disk receiver 6, and the second projection 45 mounted on the moving chassis 16 of the playback part 5. Each first hole 44 is composed of the first slope part 50 and the first parallel part 49, and the second hole 46 is composed of the second slope part 51 and the second parallel part 52.

When loading or unloading the CD 2, the second projection 45 is moved in the second parallel part 52, and the first projections 43 are moved in the first slope part 50. Therefore, when loading or unloading the CD 2, the moving chassis 18 of the playback part 5, namely the cam member 24 is positioned without sliding. Further, when loading or unloading the CD 2, the moving chassis 18 of the disk receiver 6 and the moving member 26, namely the holders 19 are moved along the arrow K.

Therefore, a relative position between the holder 19 holding the CD 2 loaded or unloaded and the main body of the playback apparatus 3 is kept constant. Accordingly, the CD 2 is surely loaded or unloaded through the slot 10, and the CD 2 inserted into the main body of the playback apparatus 3 is surely held by the holder 19.

When moving the holder 19 between the receiving position and the playback position, the first projections 43 are moved in the first parallel part 49, and the second projection 45 is moved in the second slope part 51. Thereby, when moving the holders 19 between the receiving position and the playback position, the moving chassis 18 of the disk receiver 6 and the moving member 26, namely the holders 19 are positioned without sliding. Further, when moving the holder 19 between the receiving position and the playback position, the moving chassis 16 of the playback part 5, namely the cam member 24 is moved along the arrow K.

Therefore, any CD 2 can be positioned on the playback position. Therefore, the data from any CD 2 can be read out.

The moving member 26 and the cam member 24 are formed in a cylinder shape. The moving chassis 18 and the second walls 27 are mounted on both edges of the moving member 26. The moving member 26, the cam member 24, and the rotating member 25 are arranged coaxially, and rotated integrally by the driving force of the motor 20. Thus, a rotation of the moving member 26, the rotating member 25, and the cam member 24 moves the holders 19 between the receiving position and the playback position. Therefore, a moving path of the moving member 26, the cam member 24, and the rotating member 25 can be minimized, and the main body of the playback apparatus 3, namely the CD changer 1 can be downsized.

Further, the motor 41 solely slides the cam member 24 and the moving member 26 along the arrow K. Therefore, the number of the components can be reduced, the CD changer 1 can be downsized, and the cost of the CD changer 1 can be reduced.

Further, the groove length of the spaced groove on which the projection 29 of the other older 19 slides is changed according to whether the CD 2 is played back or the CD 2 is transported. Namely, the sliding wall on which the projection 29 of the other older 19 slides is dividable, and the sliding wall unnecessary for transporting the CD 2 is not moved, and only the sliding wall necessary for transporting the CD 2 is moved so that the groove length is variable. Thus, upsizing the apparatus caused by the movement of the unnecessary sliding wall can be avoided and the apparatus can be slim.

In the present embodiment, the CD changer 1 receives a plurality of CD 2. However, the present invention may be adapted to such as a MD changer receiving MDs (Mini Disc) or a playback apparatus for DVDs (Digital Versatile Disc) or the like.

Further, in the present embodiment, the cam member 24, the rotating member 25, and the moving member 26 are formed in a cylinder shape, and rotated about the shaft for moving them. However, according to the present invention, the cam member 24, the rotating member 25, the moving member 26 and the like may be formed in such as a plate shape, and may be moved without rotation.

Further, in the present, the cam member 24 and the optical pickup 66 are integrally moved. However, according to the present invention, it is unnecessary that the cam member 24 and the optical pickup 66 are integrally moved. According to the present invention, it is essential to keep the relative position between the cam member 24 and the optical pickup 66 by moving them together.

Further, according to the present embodiment, owing to the cooperative moving mechanism 22, the cam member 24 and the moving member 26 are moved by a common driving force. However, according to the present invention, the cam member 24 and the moving member 26 are moved by respective driving forces.

Incidentally, the present embodiment only shows a typical embodiment of the present invention. The present invention is not limited to the present embodiment. Namely, it is possible to carry out the variations of the present invention without departing from a scope of the present invention.

## Claims

1. A playback apparatus for recording media comprising:
a receiver for receiving a plurality of holders for holding recording media, said holders overlapping to each other;
a playback device for playing back the recording media held by the holders;
a transporting device for transporting the playback device to a position facing a recording surface of a selected recording medium; and
a separating device for separating a selected holder from the other holders in a direction of overlapping of the recording media,
wherein the separating device is movable in the direction of overlapping of the recording media, and includes a first member having a guiding groove on which the holder with the selected recording medium slides, and a second member movable in the direction of overlapping independently from the first member,
wherein a separating groove, on which the holders holding the other recording media slide, is formed by a relative movement between the first and the second members.

2. The playback apparatus as claimed in claim 1,
wherein a groove width of the separating groove is variable corresponding to relative movement between the first member and the second member.

3. The playback apparatus as claimed in claim 2,
wherein the separating groove includes a first separating groove engaged with the other holders disposed upper than the holder holding the selected recording medium, and a second separating groove engaged with the other holders disposed lower than the holder holding the selected recording medium,
wherein the groove width between the first and the second grooves is variable corresponding to relative movement between the cam member and the transporting member.

4. The playback apparatus as claimed in claim 3,
wherein the first separating groove may be composed of a first all and a top wall of the first member, and the second separating groove may be composed of a second wall and a bottom wall of the first member.

5. The playback apparatus as claimed in any one of claims 1 to 4,
wherein the separating device is disposed coaxially with the first and the second members, and includes a rotation member for respectively rotating the first and the second members.

6. The playback apparatus as claimed in any one of claims 1 to 5,
wherein the separating device has a single driving source for driving the cam member and the transporting member in a direction of overlapping of the holders.

7. A playback apparatus for recording media comprising:
a receiver for receiving a plurality of holders for holding recording media, said holders overlapping to each other;
a playback device for playing back the recording media held by the holders;
a transporting device for transporting the playback device to a position facing a recording surface of a selected recording medium; and
a separating device for separating a selected holder from the other holders in a direction of overlapping of the recording media,
wherein the separating device is movable in the direction of overlapping of the recording media, and includes a first member having a guiding groove on which the holder with the selected recording medium slides, and a second member movable in the direction of overlapping independently from the first member,
wherein the separating device includes a dividable sliding wall for sliding the other holders in a direction of separating the other holders from the selected holder.

8. The playback apparatus as claimed in claim 7,
further comprising a carrying device for carrying the recording media to or from the receiver,
wherein the separating device includes a cam member being movable in the direction of overlapping of the recording media, and slidably engaged with the selected holder, and a transporting device for sliding part transporting a part of the sliding wall in the direction of overlapping for dividing the sliding wall when the carrying device transports the recording medium,
wherein when the transporting device transports the playback device, the cam member and the sliding wall compose a spaced groove, and when the carrying device carries the recording medium, the cam member and the divided sliding wall compose the spaced groove,
wherein the other holders are engaged with the spaced groove and slide along the sliding wall or the divided sliding wall, so that the other holders are removed from the selected holder.

9. The playback apparatus as claimed in any one of claims 7 to 8,
wherein the sliding part includes first and second sliding parts both having a slope wall sloping in the same direction,
wherein when the carrying member carries the recording medium, the transporting device for sliding part transports any one of the first or the second sliding parts relative to the other so that a part of the sliding wall is divided.
